(19) Europäisches Patentamt
European Patent Office
Office européen des brevets

(11) **EP 4 572 161 A1**

(12) **EUROPEAN PATENT APPLICATION**
published in accordance with Art. 153(4) EPC

(43) Date of publication:
**18.06.2025 Bulletin 2025/25**

(21) Application number: **22954594.2**

(22) Date of filing: **12.08.2022**

(51) International Patent Classification (IPC):
**H04B 7/024** (2017.01)

(52) Cooperative Patent Classification (CPC):
**H04B 7/024**

(86) International application number:
**PCT/CN2022/112120**

(87) International publication number:
**WO 2024/031635 (15.02.2024 Gazette 2024/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **GAO, Xueyuan**
**Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **COORDINATED MULTI-POINT TRANSMISSION METHOD AND APPARATUS AND STORAGE MEDIUM**

(57) A coordinated multi-point transmission method and apparatus and a storage medium. The coordinated multi-point transmission method is applied to a terminal, and comprises: acquiring coordinated multi-point transmission configuration information configured by a network device, the coordinated multi-point transmission configuration information being used for configuring a plurality of TRPs or a plurality of TRP groups, each TRP group comprising at least one TRP, and the plurality of TRPs or the plurality of TRP groups perform coherent coordinated transmission; on the basis of the coordinated multi-point transmission configuration information selecting, among the plurality of TRPs that perform coherent transmission, all or some TRPs for coherent transmission, or selecting among the plurality of TRP groups that perform coherent transmission, all or some TRP groups for coherent transmission, and sending indication information to the network device, the indication information being used for indicating the TRPs selected by the terminal among the plurality of TRPs and used for coherent transmission, or used for indicating the TRP groups selected by the terminal among the plurality of TRP groups and used for transmission. According to the present application, indication feedback overhead of terminals can be reduced.

FIG. 3A

**Description**

## TECHNICAL FIELD

The disclosure relates to the field of communication technology, and in particular to a method and an apparatus for coordinated multiple point (CoMP) transmission, and a storage medium.

## BACKGROUND

With the development of the communication technology, in order to improve edge coverage, a balanced service quality is provided to each user within a service area. For example, a signal reception strength for users at the edge of the cell is improved, the experience of the users at the edge of the cell is enhanced, and a spectral efficiency of a system is increased. When a network device (e.g., a base station) has multiple transmission reception points (multi-TRP or mTRP), the mTRP/ multi-panel may be used to provide a service to the terminal. In addition, in order to provide a more balanced service quality within the service area, coordinated multiple point (CoMP) transmission technology is introduced.

The CoMP transmission technology may be roughly categorized into coherent joint transmission (CJT) and non-coherent joint transmission (NCJT). In the CJT, each data flow is mapped to the mTRP/ multi-panel involved in the coordination through a weighted vector. The CJT splices a plurality of subarrays together to form a higher-dimensional virtual array, in order to obtain a higher beamforming or precoding gain.

In the related art, the NCJT supports a network device to configure the mTRP and associated sounding reference signal (SRS) resources for a terminal. The terminal selects a corresponding SRS resource based on the mTRP and the SRS resources configured by the network device to perform the CoMP transmission. However, for the CJT, there is no clear solution on how the network device configures the TRPs and how the terminal reports the selected TRPs.

## SUMMARY

In order to overcome the problems in the related art, the disclosure provides a method and an apparatus for coordinated multiple point (CoMP) transmission, and a storage medium.

According to a first aspect of embodiments of the disclosure, a method for CoMP transmission, applied to a terminal, is provided. The method includes: obtaining CoMP configuration information configured by a network device, in which the CoMP configuration information configures multiple transmission reception points (mTRP) or a plurality of TRP groups, each TRP group in the plurality of TRP groups includes at least one TRP, and the mTRP or the plurality of TRP groups perform coherent joint transmission (CJT); selecting all or part of the TRPs to perform the CJT from the mTRP performing the CJT, or selecting all or part of the TRP groups to perform the CJT from the plurality of TRP groups performing the CJT, based on the CoMP transmission configuration information; and sending indication information to the network device, in which the indication information indicates the TRPs performing the CJT selected by the terminal from the mTRP, or the TRP groups selected by the terminal to perform the CJT from the plurality of TRP groups

In an implementation, the CoMP transmission configuration information includes at least one of: channel status information-reference signal (CSI-RS) resource information; number information of TRPs or TRP groups; number information of port groups into which ports corresponding to CSI-RS resources are divided; or relationship configuration information, in which the relationship configuration information configures a correspondence between a CSI-RS resource and a TRP or a TRP group, or a correspondence between a port group index and a TRP or a TRP group.

In an implementation, the CSI-RS resource information includes a CSI-RS resource set, the CSI-RS resource set includes a plurality of CSI-RS resources, each CSI-RS resource in the plurality of CSI-RS resources has a correspondence with the TRP or the TRP group, and a number of CSI-RS resources included in the CSI-RS resource set is greater than or equal to a number of TRPs or TRP groups configured by the network device.

In an implementation, the CSI-RS resource information includes a plurality of CSI-RS resource groups, each CSI-RS resource group in the plurality of CSI-RS resource groups includes at least one CSI-RS resource, and resources included in each CSI-RS resource group belong to one or more CSI-RS resource sets; each CSI-RS resource included in the CSI-RS resource group has a correspondence with the TRP or the TRP group, and a number of CSI-RS resource groups is greater than or equal to a number of TRPs or TRP groups configured by the network device.

In an implementation, the correspondence between each CSI-RS resource in the CSI-RS resource set or in the CSI-RS resource group and the TRP or the TRP group is determined by at least one of following ways: sorting the CSI-RS resources in the CSI-RS resource set or in the CSI-RS resource group in an ascending order based on CSI-RS resource IDs, and causing first $N_{TRP}$ CSI-RS resources in the CSI-RS resources sorted to correspond to $N_{TRP}$ TRPs or $N_{TRP}$ TRP groups; or determining a correspondence between the $N_{TRP}$ TRPs or the $N_{TRP}$ TRP groups and the CSI-RS resource IDs based on a set mathematical algorithmic criterion; or determining that the $N_{TRP}$ TRPs or the $N_{TRP}$ TRP groups correspond to the $N_{TRP}$ CSI-RS resources based on the relationship configuration information, in which $N_{TRP}$ is the number of TRPs or

TRP groups configured by the network device.

In an implementation, the CoMP transmission configuration information includes the CSI-RS resource information, and the CSI-RS resource information includes a single CSI-RS resource; the CoMP transmission configuration information further includes number information of port groups into which ports included in the single CSI-RS resource are divided, and each port group into which ports included in the single CSI-RS resource are divided has a correspondence with the TRP or the TRP group.

In an implementation, the correspondence between each port group and the TRP or the TRP group is determined by at least one of following ways: sorting the port groups into which ports are divided in an ascending order based on port group indexes, and causing first $N_{TRP}$ port groups in the port groups sorted to correspond to $N_{TRP}$ TRPs or $N_{TRP}$ TRP groups; or determining a correspondence between the $N_{TRP}$ TRPs or the $N_{TRP}$ TRP groups and the port group indexes based on a set mathematical algorithmic criterion; or determining that the $N_{TRP}$ TRPs or the $N_{TRP}$ TRP groups correspond to the $N_{TRP}$ port groups based on the relationship configuration information, in which $N_{TRP}$ is the number of TRPs or TRP groups configured by the network device.

In an implementation, the CoMP transmission configuration information includes the CSI-RS resource information; and indication information includes CSI-RS resource indication (CRI) information.

In an implementation, the CSI-RS resource information includes a CSI-RS resource set, and the CRI information indicates a CSI-RS resource selected by the terminal from the CSI-RS resource set.

In an implementation, the CSI-RS resource information includes a plurality of CSI-RS resource groups, the CRI information includes one or more pieces of CRI information, and the CRI information indicates a CSI-RS resource selected by the terminal from each CSI-RS resource group in the plurality of CSI-RS resource groups.

In an implementation, the CRI information is carried with a CRI field, a number of bits of the CRI field is determined based on a total number of CSI-RS resources or based on a number of TRPs or TRP groups configured by the network device; in response to the CSI-RS resource information including a CSI-RS resource set, the total number of CSI-RS resources is a total number of CSI-RS resources included in the CSI-RS resource set; and in response to the CSI-RS resource information including a plurality of CSI-RS resource groups, the total number of CSI-RS resources is a total number of CSI-RS resources included in all the CSI-RS resource groups.

In an implementation, the CRI information includes indication information indicating a CSI-RS resource selected by the terminal, the indication information indicating the CSI-RS resource selected by the terminal includes first indication information and second indication information; the first indication information indicates a number of TRPs or TRP groups for the CoMP transmission selected by the terminal; and the second indication information indicates CSI-RS resources corresponding to TRPs or TRP groups for the CoMP transmission selected by the terminal and is determined based on a number of resource combinations, the number of resource combinations is a number of combinations for a specified number of resources selected from a number of CSI-RS resources configured by the network device, or a number of combinations for a specified number of resources selected from the total number of CSI-RS resources, and the specified number is the number of TRPs or TRP groups for the CoMP transmission selected by the terminal.

In an implementation, the CRI information is carried with a CRI field, and a number of bits of the CRI field is determined based on a number of CSI-RS resources in a CSI-RS resource group selected by the terminal or based on a number of TRPs or TRP groups configured by the network device.

In an implementation, the CRI information includes indication information indicating a CSI-RS resource in the CSI-RS resource group selected by the terminal, the indication information indicating the CSI-RS resource selected by the terminal includes third indication information and fourth indication information; the third indication information indicates a number of CSI-RS resources in the resource group selected by the terminal and is determined based on the number of CSI-RS resources in the resource group selected by the terminal; and the fourth indication information indicates resource combinations corresponding to TRPs or TRP groups for the CoMP transmission selected by the terminal and is determined based on a number of resource combinations, the number of resource combinations is a number of combinations for a specified number of resources selected from a number of CSI-RS resources configured by the network device, or a number of combinations for a specified number of resources selected from the total number of CSI-RS resources, and the specified number is the number of TRPs or TRP groups for the CoMP transmission selected by the terminal.

In an implementation, indication information indicates port group index information corresponding to TRPs or TRP groups for the CoMP transmission selected by the terminal.

In an implementation, the indication information includes indication information indicating a port group selected by the terminal, the indication information indicating the port group selected by the terminal is determined based on fifth indication information and sixth indication information; the fifth indication information indicates a number of port groups selected in a CSI-RS resource group selected by the terminal and is determined based on a number of TRPs or TRP groups for the CoMP transmission selected by the terminal; and the sixth indication information indicates port combinations corresponding to the TRPs or the TRP groups for the CoMP transmission selected by the terminal, and is determined based on a number of port group combinations, the number of port group combinations is a number of combinations for a specified number of port groups selected from the port groups into which ports included in the single CSI-RS resource are divided, and the specified number is the number of TRPs or TRP groups for the CoMP transmission selected by the terminal.

In an implementation, the TRP or the TRP group has a correspondence with a phase factor or an amplitude factor; and indication information indicates a phase factor or an amplitude factor corresponding to a TRP or a TRP group for the CoMP transmission selected by the terminal.

In an implementation, the indication information indicates a quantized value corresponding to the phase factor, or a quantized value corresponding to the amplitude factor.

According to a second aspect of embodiments of the disclosure, a method for CoMP transmission, applied to a network device, is provided. The method includes: configuring CoMP transmission configuration information, in which the CoMP transmission configuration information configures mTRP or a plurality of TRP groups, each TRP group in the plurality of TRP groups includes at least one TRP, and the mTRP or the plurality of TRP groups performs CJT; receiving indication information from a terminal, in which the indication information indicates the TRPs or the TRP groups selected by the terminal to perform the CJT from the mTRP, the TRPs performing the CJT is all or part of the TRPs selected by the terminal to perform the CJT from the mTRP performing the CJT based on the CoMP transmission configuration information, and the TRP groups performing the CJT is all or part of the TRP groups selected by the terminal to perform the CJT from the plurality of TRP groups performing the CJT based on the CoMP transmission configuration information

In an implementation, the CoMP transmission configuration information includes at least one of: CSI-RS resource information; number information of TRPs or TRP groups; number information of port groups into which ports corresponding to CSI-RS resources are divided; or relationship configuration information, in which the relationship configuration information configures a correspondence between a CSI-RS resource and a TRP or a TRP group, or a correspondence between a port group index and a TRP or a TRP group.

In an implementation, the CSI-RS resource information includes a CSI-RS resource set, the CSI-RS resource set includes a plurality of CSI-RS resources, each CSI-RS resource in the plurality of CSI-RS resources has a correspondence with the TRP or the TRP group, and a number of CSI-RS resources included in the CSI-RS resource set is greater than or equal to a number of TRPs or TRP groups configured by the network device.

In an implementation, the CSI-RS resource information includes a plurality of CSI-RS resource groups, each CSI-RS resource group in the plurality of CSI-RS resource groups includes at least one CSI-RS resource, and resources included in each CSI-RS resource group belong to one or more CSI-RS resource sets; each CSI-RS resource included in the CSI-RS resource group has a correspondence with the TRP or the TRP group, and a number of CSI-RS resource groups is greater than or equal to a number of TRPs or TRP groups configured by the network device.

In an implementation, the correspondence between each CSI-RS resource in the CSI-RS resource set or in the CSI-RS resource group and the TRP or the TRP group is determined by at least one of following ways: sorting the CSI-RS resources in the CSI-RS resource set or in the CSI-RS resource group in an ascending order based on CSI-RS resource IDs, and causing first $N_{TRP}$ CSI-RS resources in the CSI-RS resources sorted to correspond to $N_{TRP}$ TRPs or $N_{TRP}$ TRP groups; or determining a correspondence between the $N_{TRP}$ TRPs or the $N_{TRP}$ TRP groups and the CSI-RS resource IDs based on a set mathematical algorithmic criterion; or determining that the $N_{TRP}$ TRPs or the $N_{TRP}$ TRP groups correspond to the $N_{TRP}$ CSI-RS resources based on the relationship configuration information, in which $N_{TRP}$ is the number of TRPs or TRP groups configured by the network device.

In an implementation, the CoMP transmission configuration information includes the CSI-RS resource information, and the CSI-RS resource information includes a single CSI-RS resource; the CoMP transmission configuration information further includes number information of port groups into which ports included in the single CSI-RS resource are divided, and each port group into which ports included in the single CSI-RS resource are divided has a correspondence with the TRP or the TRP group.

In an implementation, the correspondence between each port group and the TRP or the TRP group is determined in the following manner: sorting the port groups into which ports are divided in an ascending order based on port group indexes, and causing first $N_{TRP}$ port groups in the port groups sorted to correspond to $N_{TRP}$ TRPs or $N_{TRP}$ TRP groups; or determining a correspondence between the $N_{TRP}$ TRPs or the $N_{TRP}$ TRP groups and the port group indexes based on a set mathematical algorithmic criterion; or determining that the $N_{TRP}$ TRPs or the $N_{TRP}$ TRP groups correspond to the $N_{TRP}$ port groups based on the relationship configuration information, in which $N_{TRP}$ is the number of TRPs or TRP groups configured by the network device.

In an implementation, the CoMP transmission configuration information includes the CSI-RS resource information; and indication information includes CRI information.

In an implementation, the CSI-RS resource information includes a CSI-RS resource set, and the CRI information indicates a CSI-RS resource selected by the terminal from the CSI-RS resource set.

In an implementation, the CSI-RS resource information includes a plurality of CSI-RS resource groups, the CRI information includes one or more pieces of CRI information, and the CRI information indicates a CSI-RS resource selected by the terminal from each CSI-RS resource group in the plurality of CSI-RS resource groups.

In an implementation, the CRI information is carried with a CRI field, a number of bits of the CRI field is determined based on a total number of CSI-RS resources or based on a number of TRPs or **TRP** groups configured by the network device; in response to the CSI-RS resource information including a CSI-RS resource set, the total number of CSI-RS resources is a total number of CSI-RS resources included in the CSI-RS resource set; and in response to the CSI-RS resource information including a plurality of CSI-RS resource groups, the total number of CSI-RS resources is a total number of CSI-RS resources included in all the CSI-RS resource groups.

**In** an implementation, the CRI information includes indication information indicating a CSI-RS resource selected by the terminal, the indication information indicating the CSI-RS resource selected by the terminal includes first indication information and second indication information; the first indication information indicates a number of TRPs or TRP groups for the CoMP transmission selected by the terminal; and the second indication information indicates CSI-RS resources corresponding to TRPs or TRP groups for the CoMP transmission selected by the terminal and is determined based on a number of resource combinations, the number of resource combinations is a number of combinations for a specified number of resources selected from a number of CSI-RS resources configured by the network device, or a number of combinations for a specified number of resources selected from the total number of CSI-RS resources, and the specified number is the number of TRPs or TRP groups for the CoMP transmission selected by the terminal.

**In** an implementation, the CRI information is carried with a CRI field, and a number of bits of the CRI field is determined based on a number of CSI-RS resources in a CSI-RS resource group selected by the terminal or based on a number of TRPs or TRP groups configured by the network device.

In an implementation, the CRI information includes indication information indicating a CSI-RS resource in the CSI-RS resource group selected by the terminal, the indication information indicating the CSI-RS resource selected by the terminal includes third indication information and fourth indication information; the third indication information indicates a number of CSI-RS resources in the resource group selected by the terminal and is determined based on the number of CSI-RS resources in the resource group selected by the terminal; and the fourth indication information indicates resource combinations corresponding to TRPs or TRP groups for the CoMP transmission selected by the terminal and is determined based on a number of resource combinations, the number of resource combinations is a number of combinations for a specified number of resources selected from a number of CSI-RS resources configured by the network device, or a number of combinations for a specified number of resources selected from the total number of CSI-RS resources, and the specified number is the number of TRPs or TRP groups for the CoMP transmission selected by the terminal.

In an implementation, indication information indicates port group index information corresponding to TRPs or TRP groups for the CoMP transmission selected by the terminal.

In an implementation, the indication information includes indication information indicating a port group selected by the terminal, the indication information indicating the port group selected by the terminal is determined based on fifth indication information and sixth indication information; the fifth indication information indicates a number of port groups selected in a CSI-RS resource group selected by the terminal and is determined based on a number of TRPs or TRP groups for the CoMP transmission selected by the terminal; and the sixth indication information indicates port combinations corresponding to the TRPs or the TRP groups for the CoMP transmission selected by the terminal, and is determined based on a number of port group combinations, the number of port group combinations is a number of combinations for a specified number of port groups selected from the port groups into which ports included in the single CSI-RS resource are divided, and the specified number is the number of TRPs or TRP groups for the CoMP transmission selected by the terminal.

In an implementation, the TRP or the TRP group has a correspondence with a phase factor or an amplitude factor; and indication information indicates a phase factor or an amplitude factor corresponding to a TRP or a TRP group for the CoMP transmission selected by the terminal.

In an implementation, the indication information indicates a quantized value corresponding to the phase factor, or a quantized value corresponding to the amplitude factor.

According to a third aspect of embodiments of the disclosure, an apparatus for CoMP transmission is provided. The apparatus includes: an obtaining unit, configured to obtain CoMP configuration information configured by a network device, in which the CoMP configuration information configures mTRP or a plurality of TRP groups, each TRP group in the plurality of TRP groups includes at least one TRP, and the mTRP or the plurality of TRP groups performs CJT; a processing unit, configured to select all or part of the TRPs to perform the CJT from the mTRP performing the CJT, or select all or part of the TRP groups to perform the CJT from the plurality of TRP groups performing the CJT, based on the CoMP transmission configuration information; and a sending unit, configured to send indication information to the network device, in which the indication information indicates the TRPs performing the CJT selected by the terminal from the mTRP, or the TRP groups selected by the terminal to perform the CJT from the plurality of TRP groups.

In an implementation, the CoMP transmission configuration information includes at least one of: CSI-RS resource information; number information of TRPs or TRP groups; number information of port groups into which ports corresponding to CSI-RS resources are divided; or relationship configuration information, in which the relationship configuration information configures a correspondence between a CSI-RS resource and a TRP or a TRP group, or a correspondence between a port group index and a TRP or a TRP group.

In an implementation, the CSI-RS resource information includes a CSI-RS resource set, the CSI-RS resource set includes a plurality of CSI-RS resources, each CSI-RS resource in the plurality of CSI-RS resources has a correspondence with the TRP or the TRP group, and a number of CSI-RS resources included in the CSI-RS resource set is greater than or equal to a number of TRPs or TRP groups configured by the network device.

In an implementation, the CSI-RS resource information includes a plurality of CSI-RS resource groups, each CSI-RS resource group in the plurality of CSI-RS resource groups includes at least one CSI-RS resource, and resources included in each CSI-RS resource group belong to one or more CSI-RS resource sets; each CSI-RS resource included in the CSI-RS resource group has a correspondence with the TRP or the TRP group, and a number of CSI-RS resource groups is greater than or equal to a number of TRPs or TRP groups configured by the network device.

In an implementation, the correspondence between each CSI-RS resource in the CSI-RS resource set or in the CSI-RS resource group and the TRP or the TRP group is determined by at least one of following ways: sorting the CSI-RS resources in the CSI-RS resource set or in the CSI-RS resource group in an ascending order based on CSI-RS resource IDs, and causing first $N_{TRP}$ CSI-RS resources in the CSI-RS resources sorted to correspond to $N_{TRP}$ TRPs or $N_{TRP}$ TRP groups; or determining a correspondence between the $N_{TRP}$ TRPs or the $N_{TRP}$ TRP groups and the CSI-RS resource IDs based on a set mathematical algorithmic criterion; or determining that the $N_{TRP}$ TRPs or the $N_{TRP}$ TRP groups correspond to the $N_{TRP}$ CSI-RS resources based on the relationship configuration information, in which $N_{TRP}$ is the number of TRPs or TRP groups configured by the network device.

In an implementation, the CoMP transmission configuration information includes the CSI-RS resource information, and the CSI-RS resource information includes a single CSI-RS resource; the CoMP transmission configuration information further includes number information of port groups into which ports included in the single CSI-RS resource are divided, and each port group into which ports included in the single CSI-RS resource are divided has a correspondence with the TRP or the TRP group.

In an implementation, the correspondence between each port group and the TRP or the TRP group is determined by at least one of following ways: sorting the port groups into which ports are divided in an ascending order based on port group indexes, and causing first $N_{TRP}$ port groups in the port groups sorted to correspond to $N_{TRP}$ TRPs or $N_{TRP}$ TRP groups; or determining a correspondence between the $N_{TRP}$ TRPs or the $N_{TRP}$ TRP groups and the port group indexes based on a set mathematical algorithmic criterion; or determining that the $N_{TRP}$ TRPs or the $N_{TRP}$ TRP groups correspond to the $N_{TRP}$ port groups based on the relationship configuration information, in which $N_{TRP}$ is the number of TRPs or TRP groups configured by the network device.

In an implementation, the CoMP transmission configuration information includes the CSI-RS resource information; and indication information includes CRI information.

In an implementation, the CSI-RS resource information includes a CSI-RS resource set, and the CRI information indicates a CSI-RS resource selected by the terminal from the CSI-RS resource set.

In an implementation, the CSI-RS resource information includes a plurality of CSI-RS resource groups, the CRI information includes one or more pieces of CRI information, and the CRI information indicates a CSI-RS resource selected by the terminal from each CSI-RS resource group in the plurality of CSI-RS resource groups.

In an implementation, the CRI information is carried with a CRI field, a number of bits of the CRI field is determined based on a total number of CSI-RS resources or based on a number of TRPs or TRP groups configured by the network device; in response to the CSI-RS resource information including a CSI-RS resource set, the total number of CSI-RS resources is a total number of CSI-RS resources included in the CSI-RS resource set; and in response to the CSI-RS resource information including a plurality of CSI-RS resource groups, the total number of CSI-RS resources is a total number of CSI-RS resources included in all the CSI-RS resource groups.

In an implementation, the CRI information includes indication information indicating a CSI-RS resource selected by the terminal, the indication information indicating the CSI-RS resource selected by the terminal includes first indication information and second indication information; the first indication information indicates a number of TRPs or TRP groups for the CoMP transmission selected by the terminal; and the second indication information indicates CSI-RS resources corresponding to TRPs or TRP groups for the CoMP transmission selected by the terminal and is determined based on a number of resource combinations, the number of resource combinations is a number of combinations for a specified number of resources selected from a number of CSI-RS resources configured by the network device, or a number of combinations for a specified number of resources selected from the total number of CSI-RS resources, and the specified number is the number of TRPs or TRP groups for the CoMP transmission selected by the terminal.

In an implementation, the CRI information is carried with a CRI field, and a number of bits of the CRI field is determined based on a number of CSI-RS resources in a CSI-RS resource group selected by the terminal or based on a number of TRPs or TRP groups configured by the network device.

In an implementation, the CRI information includes indication information indicating a CSI-RS resource in the CSI-RS resource group selected by the terminal, the indication information indicating the CSI-RS resource selected by the terminal includes third indication information and fourth indication information; the third indication information indicates a number of CSI-RS resources in the resource group selected by the terminal and is determined based on the number of CSI-RS resources in the resource group selected by the terminal; and the fourth indication information indicates resource combinations corresponding to TRPs or TRP groups for the CoMP transmission selected by the terminal and is determined based on a number of resource combinations, the number of resource combinations is a number of combinations for a specified number of resources selected from a number of CSI-RS resources configured by the network device, or a number of combinations for a specified number of resources selected from the total number of CSI-RS resources, and the specified number is the number of TRPs or TRP groups for the CoMP transmission selected by the terminal.

In an implementation, indication information indicates port group index information corresponding to TRPs or TRP groups for the CoMP transmission selected by the terminal.

In an implementation, the indication information includes indication information indicating a port group selected by the terminal, the indication information indicating the port group selected by the terminal is determined based on fifth indication information and sixth indication information; the fifth indication information indicates a number of port groups selected in a CSI-RS resource group selected by the terminal and is determined based on a number of TRPs or TRP groups for the CoMP transmission selected by the terminal; and the sixth indication information indicates port combinations corresponding to the TRPs or the TRP groups for the CoMP transmission selected by the terminal, and is determined based on a number of port group combinations, the number of port group combinations is a number of combinations for a specified number of port groups selected from the port groups into which ports included in the single CSI-RS resource are divided, and the specified number is the number of TRPs or TRP groups for the CoMP transmission selected by the terminal.

In an implementation, the TRP or the TRP group has a correspondence with a phase factor or an amplitude factor; and indication information indicates a phase factor or an amplitude factor corresponding to a TRP or a TRP group for the CoMP transmission selected by the terminal.

In an implementation, the indication information indicates a quantized value corresponding to the phase factor, or a quantized value corresponding to the amplitude factor.

According to a fourth aspect of embodiments of the disclosure, an apparatus for CoMP transmission is provided. The apparatus includes: a processing unit, configured to configure CoMP transmission configuration information, in which the CoMP transmission configuration information configures mTRP or a plurality of TRP groups, each TRP group in the plurality of TRP groups includes at least one TRP, and the mTRP or the plurality of TRP groups performs CJT; and a receiving unit, configured to receive indication information from a terminal, in which the indication information indicates the TRPs or the TRP groups selected by the terminal to perform the CJT from the mTRP, the TRPs performing the CJT is all or part of the TRPs selected by the terminal to perform the CJT from the mTRP performing the CJT based on the CoMP transmission configuration information, and the TRP groups performing the CJT is all or part of the TRP groups selected by the terminal to perform the CJT from the plurality of TRP groups performing the CJT based on the CoMP transmission configuration information.

In an implementation, the CoMP transmission configuration information includes at least one of: CSI-RS resource information; number information of TRPs or TRP groups; number information of port groups into which ports corresponding to CSI-RS resources are divided; or relationship configuration information, in which the relationship configuration information configures a correspondence between a CSI-RS resource and a TRP or a TRP group, or a correspondence between a port group index and a TRP or a TRP group.

In an implementation, the CSI-RS resource information includes a CSI-RS resource set, the CSI-RS resource set includes a plurality of CSI-RS resources, each CSI-RS resource in the plurality of CSI-RS resources has a correspondence with the TRP or the TRP group, and a number of CSI-RS resources included in the CSI-RS resource set is greater than or equal to a number of TRPs or TRP groups configured by the network device.

In an implementation, the CSI-RS resource information includes a plurality of CSI-RS resource groups, each CSI-RS resource group in the plurality of CSI-RS resource groups includes at least one CSI-RS resource, and resources included in each CSI-RS resource group belong to one or more CSI-RS resource sets; each CSI-RS resource included in the CSI-RS resource group has a correspondence with the TRP or the TRP group, and a number of CSI-RS resource groups is greater than or equal to a number of TRPs or TRP groups configured by the network device.

In an implementation, the correspondence between each CSI-RS resource in the CSI-RS resource set or in the CSI-RS resource group and the TRP or the TRP group is determined by at least one of following ways: sorting the CSI-RS resources in the CSI-RS resource set or in the CSI-RS resource group in an ascending order based on CSI-RS resource IDs, and causing first $N_{TRP}$ CSI-RS resources in the CSI-RS resources sorted to correspond to $N_{TRP}$ TRPs or $N_{TRP}$ TRP groups; or determining a correspondence between the $N_{TRP}$ TRPs or the $N_{TRP}$ TRP groups and the CSI-RS resource IDs based on a set mathematical algorithmic criterion; or determining that the $N_{TRP}$ TRPs or the $N_{TRP}$ TRP groups correspond to the $N_{TRP}$ CSI-RS resources based on the relationship configuration information, in which $N_{TRP}$ is the number of TRPs or TRP groups configured by the network device.

In an implementation, the CoMP transmission configuration information includes the CSI-RS resource information, and the CSI-RS resource information includes a single CSI-RS resource; the CoMP transmission configuration information further includes number information of port groups into which ports included in the single CSI-RS resource are divided, and each port group into which ports included in the single CSI-RS resource are divided has a correspondence with the TRP or the TRP group.

In an implementation, the correspondence between each port group and the TRP or the TRP group is determined in the following manner: sorting the port groups into which ports are divided in an ascending order based on port group indexes, and causing first $N_{TRP}$ port groups in the port groups sorted to correspond to $N_{TRP}$ TRPs or $N_{TRP}$ TRP groups; or determining a correspondence between the $N_{TRP}$ TRPs or the $N_{TRP}$ TRP groups and the port group indexes based on a set mathematical algorithmic criterion; or determining that the $N_{TRP}$ TRPs or the $N_{TRP}$ TRP groups correspond to the $N_{TRP}$ port groups based on the relationship configuration information, in which $N_{TRP}$ is the number of TRPs or TRP groups configured by the network device.

In an implementation, the CoMP transmission configuration information includes the CSI-RS resource information; and indication information includes CRI information.

In an implementation, the CSI-RS resource information includes a CSI-RS resource set, and the CRI information indicates a CSI-RS resource selected by the terminal from the CSI-RS resource set.

In an implementation, the CSI-RS resource information includes a plurality of CSI-RS resource groups, the CRI information includes one or more pieces of CRI information, and the CRI information indicates a CSI-RS resource selected by the terminal from each CSI-RS resource group in the plurality of CSI-RS resource groups.

In an implementation, the CRI information is carried with a CRI field, a number of bits of the CRI field is determined based on a total number of CSI-RS resources or based on a number of TRPs or TRP groups configured by the network device; in response to the CSI-RS resource information including a CSI-RS resource set, the total number of CSI-RS resources is a total number of CSI-RS resources included in the CSI-RS resource set; and in response to the CSI-RS resource information including a plurality of CSI-RS resource groups, the total number of CSI-RS resources is a total number of CSI-RS resources included in all the CSI-RS resource groups.

In an implementation, the CRI information includes indication information indicating a CSI-RS resource selected by the terminal, the indication information indicating the CSI-RS resource selected by the terminal includes first indication information and second indication information; the first indication information indicates a number of TRPs or TRP groups for the CoMP transmission selected by the terminal; and the second indication information indicates CSI-RS resources corresponding to TRPs or TRP groups for the CoMP transmission selected by the terminal and is determined based on a number of resource combinations, the number of resource combinations is a number of combinations for a specified number of resources selected from a number of CSI-RS resources configured by the network device, or a number of combinations for a specified number of resources selected from the total number of CSI-RS resources, and the specified number is the number of TRPs or TRP groups for the CoMP transmission selected by the terminal.

In an implementation, the CRI information is carried with a CRI field, and a number of bits of the CRI field is determined based on a number of CSI-RS resources in a CSI-RS resource group selected by the terminal or based on a number of TRPs or TRP groups configured by the network device.

In an implementation, the CRI information includes indication information indicating a CSI-RS resource in the CSI-RS resource group selected by the terminal, the indication information indicating the CSI-RS resource selected by the terminal includes third indication information and fourth indication information; the third indication information indicates a number of CSI-RS resources in the resource group selected by the terminal and is determined based on the number of CSI-RS resources in the resource group selected by the terminal; and the fourth indication information indicates resource combinations corresponding to TRPs or TRP groups for the CoMP transmission selected by the terminal and is determined based on a number of resource combinations, the number of resource combinations is a number of combinations for a specified number of resources selected from a number of CSI-RS resources configured by the network device, or a number of combinations for a specified number of resources selected from the total number of CSI-RS resources, and the specified number is the number of TRPs or TRP groups for the CoMP transmission selected by the terminal.

In an implementation, indication information indicates port group index information corresponding to TRPs or TRP groups for the CoMP transmission selected by the terminal.

In an implementation, the indication information includes indication information indicating a port group selected by the terminal, the indication information indicating the port group selected by the terminal is determined based on fifth indication information and sixth indication information; the fifth indication information indicates a number of port groups selected in a CSI-RS resource group selected by the terminal and is determined based on a number of TRPs or TRP groups for the CoMP transmission selected by the terminal; and the sixth indication information indicates port combinations corresponding to the TRPs or the TRP groups for the CoMP transmission selected by the terminal, and is determined based on a number of port group combinations, the number of port group combinations is a number of combinations for a specified number of port groups selected from the port groups into which ports included in the single CSI-RS resource are divided, and the specified number is the number of TRPs or TRP groups for the CoMP transmission selected by the terminal.

In an implementation, the TRP or the TRP group has a correspondence with a phase factor or an amplitude factor; and indication information indicates a phase factor or an amplitude factor corresponding to a TRP or a TRP group for the CoMP transmission selected by the terminal.

In an implementation, the indication information indicates a quantized value corresponding to the phase factor, or a quantized value corresponding to the amplitude factor.

According to a fifth aspect of embodiments of the disclosure, a terminal for CoMP transmission is provided. The device includes: a processor; and a memory configured to store processor executable instructions; in which the processor is configured to: perform the method in the first aspect or in any one of the implementations of the first aspect.

According to a sixth aspect of embodiments of the disclosure, a device for CoMP transmission is provided. The device includes: a processor; and a memory configured to store processor executable instructions; in which the processor is configured to: perform the method in the second aspect or in any one of the implementations of the second aspect.

According to a seventh aspect of embodiments of the disclosure, a storage medium is provided. The storage medium stores instructions which, when the instructions in the storage medium are applied to a processor of a terminal, enable the terminal to perform the method in the first aspect or in any one of the implementations of the first aspect.

According to an eighth aspect of embodiments of the disclosure, a storage medium is provided. The storage medium stores instructions which, when the instructions in the storage medium are applied to a processor of a terminal, enable the terminal to perform the method in the second aspect or in any one of the implementations of the second aspect.

The technical solutions provided in embodiments of the disclosure may include the following beneficial effects. The network device configures the CoMP transmission configuration information, and then configures the mTRP or the plurality of TRP groups performing the CJT. The terminal receives the CoMP configuration information and may select all or part of the TRPs or the TRP groups to perform the CJT from the mTRP or the plurality of TRP groups performing the CJT based on the CoMP transmission configuration information. The terminal sends the indication information to the network device, in order to report to the network device the TRPs or TRP group performing the CJT selected by the terminal from the mTRP or the plurality of TRP groups. Thus, the configuration of the mTRP or the plurality of TRP groups performing the CJT is realized and the reporting and indication of the selected TRPs or the TRP groups performing the CJT is realized. It may be realized that the mTRP or the plurality of TRP groups provide data service to the terminal via the CJT, reducing the indication feedback overhead of the terminal.

It should be understood that the above general description and the following detailed description are only exemplary and explanatory, and do not limit embodiments of the disclosure.

## BRIEF DESCRIPTION OF THE DRAWINGS

The figures herein are incorporated into the specification and constitute a part of the specification, which illustrate that they conform to the embodiments of the disclosure, and are used together with the specification to explain the principles of the embodiments of the disclosure.

FIG. 1 is a schematic diagram illustrating a wireless communication system according to an example embodiment.
FIG. 2 is a schematic diagram illustrating a scenario in which multiple transmission reception points (mTRP) serve a terminal via coherent joint transmission (CJT) according to an example embodiment of the disclosure.
FIG. 3A to FIG. 3B are flowcharts illustrating a method for coordinated multiple point (CoMP) transmission according to an example embodiment.
FIG. 4 is a flowchart illustrating a method for CoMP transmission according to an example embodiment.
FIG. 5 is a block diagram illustrating an apparatus for CoMP transmission according to an example embodiment.
FIG. 6 is a block diagram illustrating an apparatus for CoMP transmission according to an example embodiment.
FIG. 7 is a block diagram illustrating a device for CoMP transmission according to an example embodiment.
FIG. 8 is a block diagram illustrating a device for CoMP transmission according to an example embodiment.

## DETAILED DESCRIPTION

Reference will now be made in detail to the exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the embodiments of the disclosure.

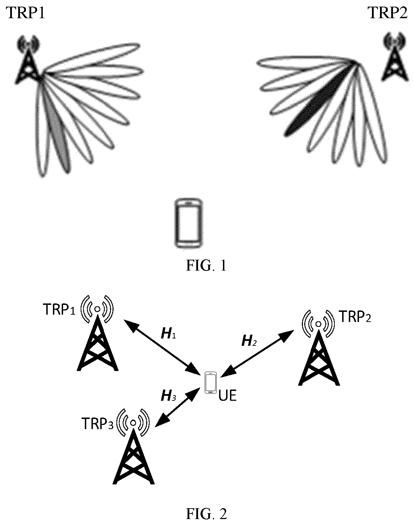

A method for coordinated multiple point (CoMP) transmission in embodiments of the disclosure may be applied to a wireless communication system as shown in FIG. 1. Referring to FIG. 1, the wireless communication system includes a network device and a terminal. The terminal is connected to the network device via wireless resources and performs data transmission.

It may be understood that the wireless communication system shown in FIG. 1 is only for schematic illustration. The wireless communication system may also include other network devices. For example, the wireless communication system may also include a core network device, a wireless relay device, a wireless backhaul device, and etc., which are not illustrated in FIG. 1. The embodiments of the disclosure do not limit a number of network devices and a number of terminals included in the wireless communication system.

It may be further understood that the wireless communication system in the embodiments of the disclosure is a network that provides a wireless communication function. The wireless communication system may utilize different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier Sense Multiple Access with Collision Avoidance (CSMA/CA). The network may be categorized as a 2 generation (G) network, a 3G network, a 4G network, or future evolutionary networks, such as a 5G network based on network capacity, speed, latency, and other parameters. The 5G network may also be referred to as a new radio (NR) network. For ease of description, the disclosure may refer to a wireless communication network as simply a network.

Further, the network device involved in the disclosure may also be referred to as a wireless access network device. The wireless access network equipment may be: a base station, an evolved base station, a home base station, an access point in a wireless fidelity system, a wireless relay node, a wireless backhaul node, a transmission point, or a transmission and reception point (TRP). The wireless access network device may also be a next-generation node base (gNB) in an NR system, or a component or part of a device forming a base station, and etc. It should be understood that in the embodiments of the disclosure, specific techniques and specific device forms used for the network device are not limited. In the disclosure, a network device may provide communication coverage for a specific geographical area and may communicate with a terminal located within the coverage area (cell). In addition, when the communication system is a vehicle-to-electronic (V2X) communication system, the network device may also be an in-vehicle device.

Further, the terminal involved in the disclosure may also be referred to as a terminal device, a user equipment (UE), a mobile station (MS), a mobile terminal (MT), etc., and is a device that provides voice and/or data connectivity to a user. For example, the terminal may be a handheld device with wireless connectivity, an in-vehicle device, and etc. Currently, the terminal may be: a mobile phone, a customer premise equipment (CPE), a pocket personal computer (PPC), a handheld computer, a personal digital assistant (PDA), a laptop computer, a tablet computer, a wearable device, or an in-vehicle device, and etc. In addition, In addition, when the communication system is a V2X communication system, the terminal may also be an in-vehicle device. It should be understood that in the embodiments of the disclosure, specific techniques and specific device forms used for the terminal are not limited.

In the related art, when the network device (e.g., a base station) has multi-TRP (mTRP), the network device is capable of using mTRP/ multi-panel to provide a service to the terminal. The CoMP technology is introduced to realize that the network device is capable of providing a more balanced service quality within the service area.

Different from single point transmission such as a single TRP or a single panel, the CoMP transmission refers to a situation where the mTRP/ multi-panel are used to provide data service for a user. Antenna arrays of each TRP may be divided into a number of relatively independent antenna panels. Thus, the shape and number of ports of the whole array plane may be flexibly adjusted based on deployment scenarios and service requirements. The antenna panels or TRPs may be connected via optical fibers for more flexible distributed deployment. In a millimeter-wave band, as the wavelength decreases, the blocking effect produced by obstacles such as the human body or vehicles is more significant. In this case, in order to guarantee the robustness of the link connection, the collaboration between the mTRP/ multi-panel may be utilized to transmit/receive a plurality of beams from a plurality of angles, thus reducing the negative impact of the blocking effect.

Based on a mapping relationship of transmission signal flows onto the mTRP/ multi-panel, the CoMP transmission technology may be roughly categorized into two coherent joint transmission (CJT) and non-coherent joint transmission (NCJT). In the CJT, each data flow is mapped to the mTRP/ multi-panel involved in the coordination through a weighted vector. In the NCJT, each data flow is mapped to only a portion of the mTRP/ multi-panel. The CJT splices a plurality of subarrays together to form a higher-dimensional virtual array, in order to obtain a higher beamforming or precoding gain.

FIG. 2 is a schematic diagram illustrating a scenario in which a terminal is served by the mTRP via the CJT according to an example embodiment of the disclosure. FIG. 2 illustrates a scenario in which three TRPs provide data services to the terminal via the CJT as an example embodiment, but is not limited here. In FIG. 2, channels from the terminal to each TRP are denoted as $H_1$, $H_2$ and $H_3$, respectively. When calculating a downlink data transmission precoding of the terminal, the channels mapped by each TRP may be combined together and regarded as a higher dimensional channel,

i.e., $H = \begin{bmatrix} H_1^T, & H_2^T, & H_3^T \end{bmatrix}^T$, and then the downlink data transmission precoding of the terminal is calculated based on the combined channel H.

In the related art, scheduling downlink data transmission from the multi-panel towards the mTRP based on a codebook is supported for the terminal.

When performing the CJT, the mTRP may use the following optional codebook structure for calculating a downlink data transmission precoding of a user.

$$\begin{bmatrix} (a_1 p_1) \times W_{1,1} \widetilde{W}_{2,1} W_{f,1}^H \\ \vdots \\ (a_N p_N) \times W_{1,N} \widetilde{W}_{2,N} W_{f,N}^H \end{bmatrix}$$

$$\begin{bmatrix} (a_1 p_1) \times W_{SF,1} \widetilde{W}_{2,1} \\ \vdots \\ (a_N p_N) \times W_{SF,N} \widetilde{W}_{2,N} \end{bmatrix}$$

$$\begin{bmatrix} W_{1,1} & 0 & 0 & 0 \\ 0 & \ddots & 0 & 0 \\ 0 & 0 & & W_{1,N} \\ 0 & 0 & \end{bmatrix} \widetilde{W}_2 W_f^H$$

In this case, $a_N$ and $p_N$ indicates a phase factor and an amplitude factor corresponding to the Nth TRP, respectively. $W_{1,N}$ indicates a spatial domain (SD) basis vector corresponding to the Nth TRP. $\widetilde{W}_{2,N}$ indicates a combination coefficient corresponding to the N TRPs. $W_{f,N}$ indicates a frequency domain (FD) basis vector corresponding to the Nth TRP. $W_{SF,N}$ indicates a combination of the SD basis vector and the FD basis vector corresponding to the Nth TRP. $\widetilde{W}_2$ indicates a combination coefficient corresponding to the N TRPs. $W_f$ indicates an FD basis vector corresponding to the N TRPs.

The CJT requires higher requirements on synchronization between transmission points and transmission capacity of backhaul links, and is thus more sensitive to many nonideal factors in real-world deployment conditions.

Embodiments of the disclosure provide a method for CoMP transmission. In the method, when the mTRP or the plurality of TRP groups provide the data service for the terminal via the CJT, CoMP transmission configuration information of the mTRP or the plurality of TRP groups performing the CJT is configured by the network device. The terminal selects all or part of the mTRP or the plurality of TRP groups configured by the network device to perform the CJT based on the CoMP transmission configuration information configured by the network device. The terminal reports the selected TRPs or the selected TRP groups performing the CJT to the network device, so that the network device may determine the TRPs or the TRP groups selected by the terminal to perform the CJT.

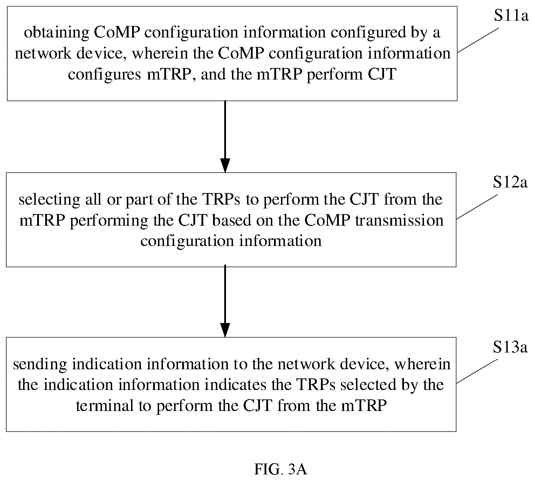

FIG. 3A is a flow chart illustrating a method for CoMP transmission according to an example embodiment. As shown in FIG. 3A, the method is applied to a terminal, including the following steps S11a to S13a.

At step S11a, CoMP configuration information configured by a network device is obtained, in which the CoMP configuration information configures mTRP, and the mTRP perform CJT.

At step S12a, all or part of the TRPs are selected to perform the CJT from the mTRP performing the CJT based on the CoMP transmission configuration information.

At step S13a, indication information is sent to the network device, in which the indication information indicates the TRPs performing the CJT selected by the terminal from the mTRP.

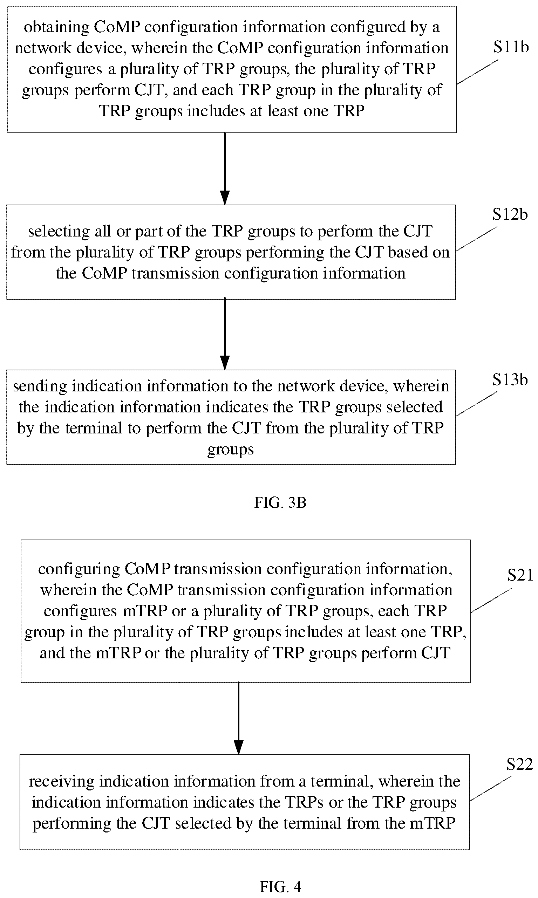

FIG. 3B is a flow chart illustrating a method for CoMP transmission according to an example embodiment. As shown in FIG. 3B, the method is applied to a terminal, including the following steps S11b to S13b.

At step S11b, CoMP configuration information configured by a network device is obtained, in which the CoMP configuration information configures a plurality of TRP groups, the plurality of TRP groups perform CJT, and each TRP group in the plurality of TRP groups includes at least one TRP.

At step S12b, all or part of the TRP groups are selected to perform the CJT from the plurality of TRP groups performing the CJT based on the CoMP transmission configuration information.

At step S13b, indication information is sent to the network device, in which the indication information indicates the TRP groups selected by the terminal to perform the CJT from the plurality of TRP groups.

In an embodiment of the disclosure, the network device may configure the mTRP or the plurality of TRP groups for the terminal. The terminal selects all or part of the TRPs or the TRP groups to perform the CJT from the mTRP or the plurality of TRP groups configured by the network device, and sends the indication information to the network device that indicates the TRPs or the TRP groups selected by the terminal to perform the CJT from the mTRP or the plurality of TRP groups.

In the method for CoMP transmission provided in embodiments of the disclosure, the CoMP transmission configuration information configured by the network device includes at least one of: a) channel status information-reference signal (CSI-RS) resource information; b) number information of TRPs or TRP groups; c) number information of port groups into which ports corresponding to CSI-RS resources are divided; or d) relationship configuration information, in which the relationship configuration information configures a correspondence between a CSI-RS resource and a TRP or a TRP group, or a correspondence between a port group index and a TRP or a TRP group.

In an embodiment of the disclosure, the CSI-RS resource information included in the CoMP transmission configuration information configured by the network device may be a single CSI-RS resource, a CSI-RS resource set including a plurality of CSI-RS resources, or a plurality of CSI-RS resource groups. Alternatively, the CSI-RS resource information may be a combination of the CSI-RS resource, the CSI-RS resource set, and the CSI-RS resource group.

In the method for CoMP transmission provided in embodiments of the disclosure, the network device configures the single CSI-RS resource.

In the method for CoMP transmission provided in embodiments of the disclosure, the network device configures the single CSI-RS resource and configures number information of port groups into which ports included in the single CSI-RS resource are divided. That is, the CoMP transmission configuration information configured by the network device includes the single CSI-RS resource and the number information of port groups into which ports included in the single CSI-RS resource are divided.

The single CSI-RS resource configured by the network device includes a plurality of ports (which may be referred to as CSI-RS ports), and the number of ports included in the single CSI-RS resource is indicated by P below, where P is a positive integer. The P ports are divided into a plurality of port groups, each port group of which has a correspondence with the TRP or the TRP group.

In an implementation, a number of port groups into which ports included in the single CSI-RS resource are divided corresponds to a number of TRPs or TRP groups for the CoMP transmission configured by the network device. The number of TRPs or TRP groups for the CoMP transmission configured by the network device is indicated by $N_{TRP}$ below, where $N_{TRP}$ is a positive integer. The P ports are divided into $N_{TRP}$ port groups. The network device may configure the number information of $N_{TRP}$ port groups into which the P ports are divided for the terminal.

In an implementation, port indexes between each port group in the $N_{TRP}$ port groups into which the P ports are divided are consecutive and sorted in an ascending order. Each port group in the plurality of port groups has a correspondence with the TRP or the TRP group, and the number of ports corresponding to each TRP or each TRP group is: $P_{TRP} = P/N_{TRP}$. The $P_{TRP}$ is a number of CSI-RS ports corresponding to each TRP or each TRP group, where $P_{TRP}$ is a positive integer.

In an implementation, $N_{TRP}$ is the number of TRPs or TRP groups configured by the network device, and the correspondence between each port group and the TRP or the TRP group is determined by at least one of the following ways: a) sorting the port groups into which ports are divided in an ascending order based on port group indexes, and causing first $N_{TRP}$ port groups in the port groups sorted to correspond to $N_{TRP}$ TRPs or $N_{TRP}$ TRP groups; or determining a correspondence between the $N_{TRP}$ TRPs or the $N_{TRP}$ TRP groups and the port group indexes based on a set mathematical algorithmic criterion; or b) determining that the $N_{TRP}$ TRPs or the $N_{TRP}$ TRP groups correspond to the $N_{TRP}$ port groups based on the relationship configuration information.

In an example, when the number of port groups into which ports included in the single CSI-RS resource are divided is equal to or more than the number of TRPs or TRP groups configured by the network device, the correspondence between the port groups and the TRPs or the TRP groups is defined as follows: the first $N_{TRP}$ port groups correspond to the $N_{TRP}$ TRPs or the $N_{TRP}$ TRP groups, after sorting the port groups into which ports are divided in the ascending order based on the port group indexes, or the corresponding $N_{TRP}$ TRPs or $N_{TRP}$ TRP groups are determined based on the set mathematical algorithmic criterion, for example, a port group index corresponding to the $(N_{TRP})^{th}$ TRP or the $(N_{TRP})^{th}$ TRP group is 2*n+1.

In another example, the network device indicates that the $N_{TRP}$ port groups correspond to the $N_{TRP}$ TRPs or the $N_{TRP}$ TRP groups via the configuration information. The terminal determines that the $N_{TRP}$ TRPs or the $N_{TRP}$ TRP groups correspond to the $N_{TRP}$ port groups based on the relationship configuration information.

In the method for CoMP transmission provided in embodiments of the disclosure, the network device configures a CSI-RS resource set. The CSI-RS resource set includes a plurality of CSI-RS resources, each CSI-RS resource in the plurality of CSI-RS resources has a correspondence with the TRP or the TRP group, and a number of CSI-RS resources included in the CSI-RS resource set is greater than or equal to a number of TRPs or TRP groups configured by the network device.

In the method for CoMP transmission provided in embodiments of the disclosure, the network device configures a plurality of CSI-RS resource groups. Each CSI-RS resource group in the plurality of CSI-RS resource groups includes at least one CSI-RS resource, and resources included in each CSI-RS resource group belong to one or more CSI-RS resource sets. Each CSI-RS resource included in the CSI-RS resource group has a correspondence with the TRP or the TRP group, and a number of CSI-RS resource groups is greater than or equal to a number of TRPs or TRP groups configured by the network device.

In an implementation, the correspondence between each CSI-RS resource and the TRP or the TRP group is determined by at least one of the following ways: a) sorting the CSI-RS resources in an ascending order based on CSI-RS resource IDs, and causing first $N_{TRP}$ CSI-RS resources in the CSI-RS resources sorted to correspond to $N_{TRP}$ TRPs or $N_{TRP}$ TRP groups; or determining a correspondence between the $N_{TRP}$ TRPs or the $N_{TRP}$ TRP groups and the CSI-RS resource IDs based on a set mathematical algorithmic criterion; b) determining that the $N_{TRP}$ TRPs or the $N_{TRP}$ TRP groups correspond to the $N_{TRP}$ CSI-RS resources based on the relationship configuration information.

In an example, when the number of CSI-RS resources is equal to or more than the number of TRPs or TRP groups configured by the network device, the correspondence between each CSI-RS resource and the TRP or the TRP group is defined as follows: the first $N_{TRP}$ CSI-S resources correspond to the $N_{TRP}$ TRPs or the $N_{TRP}$ TRP groups, after sorting the CSI-RS resources based on the CSI-RS resource IDs in the ascending order, or the corresponding $N_{TRP}$ TRPs or $N_{TRP}$ TRP groups are determined based on the set mathematical algorithmic criterion, for example, a CSI-RS resource ID corresponding to the $(N_{TRP})^{th}$ TRP or the $(N_{TRP})^{th}$ TRP group is $2*n+1$.

In another example, the network device indicates that the $N_{TRP}$ CSI-RS resources correspond to the $N_{TRP}$ TRPs or the $N_{TRP}$ TRP groups via the configuration information. The terminal determines that the $N_{TRP}$ CSI-RS resources corresponds to the $N_{TRP}$ TRPs or the $N_{TRP}$ TRP groups based on the configuration information.

In the method for CoMP transmission provided in embodiments of the disclosure, the network device may perform configuration of the CoMP transmission configuration information using any one or more combinations of the above-described ways.

In an example, the network device configures one CSI-RS resource, or a CSI-RS resource set including at least $N_{TRP}$ CSI-RS resources, or at least $N_{TRP}$ CSI-RS resource groups, for the terminal. Each CSI-RS resource group includes at least one CSI-RS resource, and each CSI-RS resource group belong to one or more CSI-RS resource sets. When one CSI-RS resource set or one CSI-RS resource group is configured, each CSI-RS resource corresponds to one TRP or one TRP group.

In another example, when configuring one resource including P CSI-RS ports for the terminal, the network device evenly/equally divides the P ports into $N_{TRP}$ groups and configures number information of the port groups for the terminal. The CSI-RS port indexes of each port group are consecutive and sorted in an ascending order. Each TRP or each TRP group correspond to one port group, and the number of CSI-RS ports corresponding to each TRP or each TRP group is: $P_{TRP} = P/N_{TRP}$.

In the method for CoMP transmission provided in embodiments of the disclosure, based on the mTRP or the plurality of TRP groups performing the CJT configured in the CoMP transmission configuration information configured by the network device, the terminal may select all or part of the TRPs or the TRP groups to perform the CJT from the mTRP or the plurality of TRP groups. It may be understood that the number of TRPs or TRP groups selected by the terminal is less than or equal to the number of TRPs or TRP groups configured by the network device. N indicates the number of TRPs or TRP groups selected by the terminal, thus $N \leq N_{TRP}$, where N is a positive integer.

In the method for CoMP transmission provided in embodiments of the disclosure, the terminal sends indication information that indicates the TRP or the TRP group performing the CJT selected by the terminal to the network device, so that the network device determines the TRP or the TRP group performing the CJT selected by the terminal.

In the method for CoMP transmission provided in embodiments of the disclosure, the terminal sends the indication information (indicating the TRP or the TRP group performing the CJT selected by the terminal) to the network device based on the CoMP transmission configuration information configured by the network device.

In an example, the terminal sends the indication information (indicating the TRP or the TRP group performing the CJT selected by the terminal) to the network device based on the CSI-RS resource information configured by the network device and/or the number of TRPs or TRP groups for CoMP transmission or the number of port groups into which ports are divided included in one CSI-RS resource.

In the method for CoMP transmission provided in embodiments of the disclosure, the CoMP transmission configuration information configured by the network device includes the CSI-RS resource information, and the indication information that indicates the TRP or the TRP group performing the CJT selected by the terminal includes CSI-RS resource indication (CRI) information.

In an implementation, the CSI-RS resource information includes a CSI-RS resource set, and the CRI information indicates a CSI-RS resource selected by the terminal from the CSI-RS resource set. The network device determines the TRP or the TRP group performing the CoMP transmission selected by the terminal based on the CSI-RS resource selected by the terminal.

In an example, when one CSI-RS resource set including at least one $N_{TRP}$ CSI-RS resources is configured by the network device, the terminal indicates a CSI-RS resource selected by the terminal by reporting one CRI, which is used for the network device to determine the TRP or the TRP group performing the CoMP transmission selected by the terminal.

In another implementation, the CSI-RS resource information includes a plurality of CSI-RS resource groups, the CRI information includes one or more pieces of CRI information, and the CRI information indicates a CSI-RS resource selected by the terminal from each CSI-RS resource group in the plurality of CSI-RS resource groups.

In an example, when $N_{TRP}$ CSI-RS resource groups is configured by the network device, the terminal indicates a CSI-RS resource selected from each CSI-RS resource group by reporting one CRI or $N_{TRP}$ CRIs, which is used for the network device to determine the TRP or the TRP group performing the CoMP transmission selected by the terminal.

In an implementation of the method for CoMP transmission provided in embodiments of the disclosure, when the CoMP transmission configuration information configured by the network device includes the CSI-RS resource information, the CSI-RS resource selected by the terminal is reported via the CRI information. The CRI information is carried with a CRI field.

A number of bits of the CRI field is determined based on a total number of CSI-RS resources or based on a number of TRPs or TRP groups configured by the network device.

In response to the CSI-RS resource information including a CSI-RS resource set, the total number of CSI-RS resources is a total number of CSI-RS resources included in the CSI-RS resource set. In response to the CSI-RS resource information including a plurality of CSI-RS resource groups, the total number of CSI-RS resources is a total number of CSI-RS resources included in all the CSI-RS resource groups.

In an implementation, the CRI information includes indication information indicating a CSI-RS resource selected by the terminal, the indication information indicating the CSI-RS resource selected by the terminal includes first indication information and second indication information.

The first indication information indicates a number of TRPs or TRP groups for the CoMP transmission selected by the terminal. The second indication information indicates CSI-RS resources corresponding to TRPs or TRP groups for the CoMP transmission selected by the terminal and is determined based on a number of resource combinations, the number of resource combinations is a number of combinations for a specified number of resources selected from a number of CSI-RS resources configured by the network device, or a number of combinations for a specified number of resources selected from the total number of CSI-RS resources, and the specified number is the number of TRPs or TRP groups for the CoMP transmission selected by the terminal.

In an embodiment, the terminal indicates the number of selected TRPs or TRP groups via a bitmap with $N_{tot}$ bits or via $\left\lceil \log_2^{C_{N_{tot}}^{N}} \right\rceil + \left\lceil \log_2^{N_{tot}} \right\rceil$ bits, where $\left\lceil \log_2^{N_{tot}} \right\rceil$ indicates the number of TRPs or TRP groups selected by the terminal to perform the CJT; $N_{tot}$ indicates the total number of CSI-RS resources in a CSI-RS resource set, or the total number of CSI-RS resources in all the CSI-RS resource groups; the CSI-RS resource index IDs in all the CSI-RS resource groups are consecutive; $\lceil \ \rceil$ indicates a rounding up operation, and $C_{N_{tot}}^{N}$ indicates selecting a combination of N CSI-RS resources from $N_{tot}$ for calculation.

Embodiments of the disclosure are illustrated below by taking the network device being a gNB as an example. If the gNB configures one CSI-RS resource set including $N_{tot} = N_{TRP} = 4$ CSI-RS resources for the terminal, each CSI-RS resource corresponds to one TRP or one TRP group. The UE measures downlink channel information from different TRPs or TRP groups to the UE based on the configured CSI-RS resource set and determines the TRPs or the TRP groups performing the CoMP transmission based on the downlink channel information. For example, the UE selects three TRPs or three TRP groups to perform the CJT.

In an implementation, the UE indicates the CSI-RS resources selected by the UE via a bitmap with $N_{tot} = 4$ bits, as shown in Table 2.

Table 2: bitmap indication for CSI-RS resource selection

| 1 | 0 | 1 | 1 |
|---|---|---|---|

In this case, 1 in Table 1 indicates that the CSI-RS resource is selected and 0 indicates that the CSI-RS resource is not selected.

In another implementation, the UE indicates the CSI-RS resource selected by the UE by reporting $\left\lceil \log_2^{C_{N_{tot}}^{N}} \right\rceil + \left\lceil \log_2^{N_{tot}} \right\rceil = 4$ bits. The UE indicates the selected CSI-RS resource by reporting the CRI.

The gNB determines the CSI-RS resource selected by the UE based on the CRI reported by the UE, and determines the TRP or the TRP group performing the CoMP transmission.

In an implementation, the CRI information is carried with a CRI field, and a number of bits of the CRI field is determined based on a number of CSI-RS resources in a CSI-RS resource group selected by the terminal or based on a number of TRPs or TRP groups configured by the network device.

In an implementation, the CRI information includes indication information indicating a CSI-RS resource in the CSI-RS resource group selected by the terminal, the indication information indicating the CSI-RS resource selected by the terminal includes third indication information and fourth indication information.

The third indication information indicates a number of CSI-RS resources in the resource group selected by the terminal and is determined based on the number of CSI-RS resources in the resource group selected by the terminal. The fourth indication information indicates resource combinations corresponding to TRPs or TRP groups for the CoMP transmission selected by the terminal and is determined based on a number of resource combinations, the number of resource combinations is a number of combinations for a specified number of resources selected from a number of CSI-RS resources configured by the network device, or a number of combinations for a specified number of resources selected from the total number of CSI-RS resources, and the specified number is the number of TRPs or TRP groups for the CoMP transmission selected by the terminal.

In an example, the terminal indicates an $i^{th}$ CSI-RS resource group by reporting $N_i$ bits or

$$\left\lceil \log_2^{C_{N_i}^{N_S}} \right\rceil + \left\lceil \log_2^{N_i} \right\rceil \text{ bits}$$

, where $N_i$ indicates a number of CSI-RS resources in the $i^{th}$ CSI-RS resource group, $N_s$ indicates the number of CSI-RS resources selected from the $i^{th}$ CSI-RS resource group, $\left\lceil \log_2^{N_i} \right\rceil$ is used by the terminal to indicate the number of CSI-RS resources selected from the $i^{th}$ CSI-RS resource group.

Embodiments of the disclosure are illustrated below by taking the network device being a gNB as an example. If the gNB configures one CSI-RS resource group including $N_{TRP}$ =4 CSI-RS resources for the terminal, each CSI-RS resource group includes 2 CSI-RS resources, and each CSI-RS resource corresponds to one TRP or one TRP group. The UE measures downlink channel information from different TRPs or TRP groups to the UE based on the configured CSI-RS resource group and determines the TRPs or the TRP groups performing the CoMP transmission based on the downlink channel information. For example, assuming that the UE selects two (N=2) TRPs or two TRP groups to perform the CJT, the UE indicates the CSI-RS resource selected by the terminal from the $i^{th}$ CSI-RS resource group by reporting $N_i$ = 2 bits, and a total of $N_{TRP}$ * $N_i$=8 bits are needed to indicate the CSI-RS resource selected by the UE. The UE indicates the selected CSI-RS resource by reporting the CRI. The gNB determines the CSI-RS resource selected by the UE based on the CRI reported by the UE, and thus determines the TRP or TRP group performing the CoMP transmission.

In an implementation of the method for CoMP transmission provided in embodiments of the disclosure, the CSI-RS resource information includes a single CSI-RS resource. The CoMP transmission configuration information configured by the network device further includes number information of port groups into which ports included in the single CSI-RS resource are divided. Each port group into which ports included in the single CSI-RS resource are divided has a correspondence with the TRP or the TRP group. The indication information sent by the terminal to the network device indicates port group index information corresponding to the TRP or the TRP group performing the CoMP transmission selected by the terminal. The network device determines the TRP or the TRP group performing the CJT selected by the terminal based on the port group index information indicated by the indication information.

In an implementation, the indication information includes indication information indicating a port group selected by the terminal, the indication information indicating the port group selected by the terminal is determined based on fifth indication information and sixth indication information.

The fifth indication information indicates a number of port groups selected in a CSI-RS resource group selected by the terminal and is determined based on a number of TRPs or TRP groups for the CoMP transmission selected by the terminal. The sixth indication information indicates port combinations corresponding to the TRPs or the TRP groups for the CoMP transmission selected by the terminal, and is determined based on a number of port group combinations, the number of port group combinations is a number of combinations for a specified number of port groups selected from the port groups into which ports included in the single CSI-RS resource are divided, and the specified number is the number of TRPs or TRP groups for the CoMP transmission selected by the terminal.

In an embodiment, the terminal indicates a CSI-RS port group selected by the terminal by reporting $N_{TRP}$ bits or

$$\left\lceil \log_2^{C_{N_{TRP}}^{N}} \right\rceil + \left\lceil \log_2^{N_{TRP}} \right\rceil \text{ bits}$$

, where $\left\lceil \log_2^{N_{TRP}} \right\rceil$ indicates the number of CSI-RS port groups selected by the terminal.

Embodiments of the disclosure are illustrated below by taking the network device being a gNB as an example. If the gNB configures a CSI-RS resource of P = 32 ports for the UE, and configures $N_{TRP}$ = 4 CSI-RS port groups for the UE, each CSI-RS port group includes $P_{TRP}$ = P/$N_{TR}$ = 8 ports. That is, each TRP or each TRP group corresponds to 8 CSI-RS ports for measuring a downlink channel from the TRP or the TRP group to the UE. If a minimum value of the CSI-RS port index is 0, the corresponding port indexes of the four TRPs or four TRP groups are 0 to 7, 8 to 15, 15 to 23, and 24 to 31, respectively.

The UE selects the 1st and the 3rd port groups, i.e., selects the 1st and the 3rd TRPs or the 1st and the 3rd TRP groups to perform the CJT, based on measured channel information for the CSI-RS port group corresponding to each TRP or each TRP group.

In an implementation, the UE indicates the selected CSI-RS port group by reporting 4 bits, as shown in Table 1.

Table 1: bitmap indication for CSI-RS port group selection

| 1 | 0 | 1 | 0 |
|---|---|---|---|

In this case, 1 in Table 1 indicates that the corresponding CSI-RS port group is selected, and 0 indicates that the corresponding CSI-RS port group is not selected.

In another implementation, the UE indicates the selected CSI-RS port group by reporting

$$\left\lceil \log_2^{C_{N_{TRP}}^N} \right\rceil + \left\lceil \log_2^{N_{TRP}} \right\rceil = 5\text{bits}$$

.

The gNB determines the TRP or the TRP group performing the CoMP transmission selected by the UE based on the indication information for the selected port group reported by the UE.

In an implementation of the method for CoMP transmission provided in embodiments of the disclosure, the TRP or the TRP group has a correspondence with a phase factor or an amplitude factor. The indication information sent by the terminal to the network device indicates a phase factor or an amplitude factor corresponding to the TRP or the TRP group for the CoMP transmission selected by the terminal. The network device determines whether the TRP or the TRP group configured by the network device is selected by the terminal for the CoMP transmission based on the phase factor or the amplitude factor indicated by the indication information.

In an implementation, the indication information indicates a quantized value corresponding to the phase factor, or a quantized value corresponding to the amplitude factor.

In an implementation, each TRP or each TRP group corresponds to one phase factor/ one amplitude factor. The terminal reports the quantized value of the phase factor or the amplitude factor, so that the network device determines the TRP or TRP group for the CoMP transmission based on the quantized value. If the phase factor/the amplitude factor corresponding to the TRP or TRP group is 0, it indicates that the TRP or the TRP group is not selected, otherwise the TRP or TRP group is selected for the CoMP transmission.

In the method for CoMP transmission provided in embodiments of the disclosure, the network device configures $N_{TRP}$ TRPs or $N_{TRP}$ TRP groups, and the terminal selects N TRPs or the TRP groups for reporting and indication, which not only realizes that the mTRP or the plurality of TRP groups provide data services to the user via CJT, but also may reduce the indication feedback overhead of the terminal.

Based on the same idea, embodiments of the disclosure further provide a method for CoMP transmission, applied to a network device.

FIG. 4 is a flowchart illustrating a method for CoMP transmission according to an example embodiment. As shown in FIG. 4, the method is applied to a network device, including the following steps S21 to S22.

At step S21, CoMP transmission configuration information is configured, in which the CoMP transmission configuration information configures mTRP or a plurality of TRP groups, each TRP group in the plurality of TRP groups includes at least one TRP, and the mTRP or the plurality of TRP groups perform CJT.

At step S22, indication information from a terminal is received, in which the indication information indicates the TRPs or the TRP groups selected by the terminal to perform the CJT from the mTRP.

The TRPs performing the CJT is all or part of the TRPs selected by the terminal to perform the CJT from the mTRP performing the CJT based on the CoMP transmission configuration information.

The TRP groups performing the CJT is all or part of the TRP groups selected by the terminal to perform the CJT from the plurality of TRP groups performing the CJT based on the CoMP transmission configuration information.

In an embodiment of the disclosure, the network device configures the mTRP or the plurality of TRP groups for the terminal. The terminal selects all or part of the TRPs or the TRP groups to perform the CJT from the mTRP or the plurality of TRP groups configured by the network device. The network device receives the indication information sent by the terminal, and determines the TRPs or the TRP groups selected by the terminal to perform the CJT from the mTRP or the plurality of TRP groups based on the indication information.

In the method for CoMP transmission provided in embodiments of the disclosure, the CoMP transmission configuration information configured by the network device includes at least one of: a) CSI-RS resource information; b) number information of TRPs or TRP groups; c) number information of port groups into which ports corresponding to CSI-RS resources are divided; or d) relationship configuration information, in which the relationship configuration information configures a correspondence between a CSI-RS resource and a TRP or a TRP group, or a correspondence between a port group index and a TRP or a TRP group.

In an embodiment of the disclosure, the CSI-RS resource information included in the CoMP transmission configuration information configured by the network device may be a single CSI-RS resource, and a CSI-RS resource set includes a plurality of CSI-RS resources, or a plurality of CSI-RS resource groups. Alternatively, the CSI-RS resource information may be a combination of the CSI-RS resource, the CSI-RS resource set, and the CSI-RS resource group.

In an implementation, the CSI-RS resource information includes a CSI-RS resource set, the CSI-RS resource set includes a plurality of CSI-RS resources, each CSI-RS resource in the plurality of CSI-RS resources has a correspondence with the TRP, and a number of CSI-RS resources included in the CSI-RS resource set is greater than or equal to a number of TRPs configured by the network device. Alternatively, each CSI-RS resource in the plurality of CSI-RS resources has a correspondence with the TRP group, and number of CSI-RS resources included in the CSI-RS resource set is greater than or equal to a number of TRP groups configured by the network device.

In an implementation, the CSI-RS resource information includes a plurality of CSI-RS resource groups, each CSI-RS resource group in the plurality of CSI-RS resource groups includes at least one CSI-RS resource, and one or more resources included in each CSI-RS resource group belong to one or more CSI-RS resource sets. Each CSI-RS resource included in the CSI-RS resource group has a correspondence with the TRP or the TRP group, and a number of CSI-RS resource groups is greater than or equal to a number of TRPs or TRP groups configured by the network device.

In an implementation, the correspondence between each CSI-RS resource and the TRP or the TRP group is determined by at least one of the following ways: a) sorting the CSI-RS resources in an ascending order based on CSI-RS resource IDs, and causing first $N_{TRP}$ CSI-RS resources in the sorted CSI-RS resources to correspond to $N_{TRP}$ TRPs or $N_{TRP}$ TRP groups; or determining a correspondence between the $N_{TRP}$ TRPs or the $N_{TRP}$ TRP groups and the CSI-RS resource IDs based on a set mathematical algorithmic criterion; b) determining that the $N_{TRP}$ TRPs or the $N_{TRP}$ TRP groups correspond to the $N_{TRP}$ CSI-RS resources based on the relationship configuration information, in which $N_{TRP}$ is the number of TRPs or TRP groups configured by the network device.

In an example, when the number of CSI-RS resources is equal to or more than the number of TRPs or TRP groups configured by the network device, the correspondence between each CSI-RS resource and the TRP or the TRP group is defined as follows: the first $N_{TRP}$ CSI-S resources correspond to the $N_{TRP}$ TRPs or the $N_{TRP}$ TRP groups, after sorting the CSI-RS resources based on the CSI-RS resource IDs in the ascending order, or the corresponding $N_{TRP}$ TRPs or $N_{TRP}$ TRP groups are determined based on the set mathematical algorithmic criterion, for example, a CSI-RS resource ID corresponding to the $(N_{TRP})^{th}$ TRP or the $(N_{TRP})^{th}$ TRP group is 2*n+1.

In another example, the network device indicates that the $N_{TRP}$ CSI-RS resources correspond to the $N_{TRP}$ TRPs or the $N_{TRP}$ TRP groups via the configuration information. The terminal determines that the $N_{TRP}$ CSI-RS resources corresponds to the $N_{TRP}$ TRPs or the $N_{TRP}$ TRP groups based on the configuration information.

In an implementation, the CoMP transmission configuration information includes the CSI-RS resource information, and the CSI-RS resource information includes a single CSI-RS resource. The CoMP transmission configuration information further includes number information of port groups into which ports included in the single CSI-RS resource are divided, and each port group into which ports included in the single CSI-RS resource are divided has a correspondence with the TRP or the TRP group.

In an implementation, the correspondence between each port group and the TRP or the TRP group is determined by at least one of the following ways: a) sorting the divided port groups in an ascending order based on port group indexes, and causing first $N_{TRP}$ port groups in the sorted port groups to correspond to $N_{TRP}$ TRPs or $N_{TRP}$ TRP groups; or determining a correspondence between the $N_{TRP}$ TRPs or the $N_{TRP}$ TRP groups and the port group indexes based on a set mathematical algorithmic criterion; or b) determining that the $N_{TRP}$ TRPs or the $N_{TRP}$ TRP groups corresponding to the $N_{TRP}$ port groups based on the relationship configuration information, in which $N_{TRP}$ is the number of TRPs or TRP groups configured by the network device.

In an example, when the number of port groups into which ports included in the single CSI-RS resource are divided is equal to or more than the number of TRPs or TRP groups configured by the network device, the correspondence between the port groups and the TRPs or the TRP groups is defined as follows: the first $N_{TRP}$ port groups correspond to the $N_{TRP}$ TRPs or the $N_{TRP}$ TRP groups, after sorting the port groups in the ascending order based on the port group indexes, or the corresponding $N_{TRP}$ TRPs or $N_{TRP}$ TRP groups are determined based on the set mathematical algorithmic criterion, for example, a port group index corresponding to the $(N_{TRP})^{th}$ TRP or the $(N_{TRP})^{th}$ TRP group is 2*n+1.

In another example, the network device indicates that the $N_{TRP}$ port groups correspond to the $N_{TRP}$ TRPs or the $N_{TRP}$ TRP groups via the configuration information. The terminal determines that the $N_{TRP}$ TRPs or the $N_{TRP}$ TRP groups correspond to the $N_{TRP}$ port groups based on the relationship configuration information.

In the method for CoMP transmission provided in embodiments of the disclosure, the network device may perform configuration of the CoMP transmission configuration information using any one or more combinations of the above-described ways.

In an example, the network device configures one CSI-RS resource, or a CSI-RS resource set includes at least $N_{TRP}$ CSI-RS resources, or at least $N_{TRP}$ CSI-RS resource groups, for the terminal. Each CSI-RS resource group includes at least one CSI-RS resource, and each CSI-RS resource group belong to one or more CSI-RS resource sets. When one CSI-RS resource set or one CSI-RS resource group is configured, each CSI-RS resource corresponds to one TRP or one TRP group.

In another example, when configuring one resource including P CSI-RS ports for the terminal, the network device evenly/equally divides the P ports into $N_{TRP}$ groups and configures number information of the port groups for the terminal. The CSI-RS port indexes of each port group are consecutive and sorted in an ascending order. Each TRP or each TRP group correspond to one port group, and the number of CSI-RS ports corresponding to each TRP or each TRP group is: $P_{TRP} = P/N_{TRP}$.

In the method for CoMP transmission provided in embodiments of the disclosure, the indication information is determined based on the CoMP configuration information configured by the network device.

In an implementation, the CoMP transmission configuration information includes the CSI-RS resource information. The indication information includes CRI information.

In an implementation, the CSI-RS resource information includes a CSI-RS resource set, and the CRI information indicates a CSI-RS resource selected by the terminal from the CSI-RS resource set.

In an example, when one CSI-RS resource set including at least one $N_{TRP}$ CSI-RS resource sets is configured by the network device, the CRI indication information is one CRI for indicating a CSI-RS resource selected by the terminal. The network device determines a TRP or the TRP group performing the CJT selected by the terminal based on the CRI.

In an implementation, the CSI-RS resource information includes a plurality of CSI-RS resource groups, the CRI information includes one or more pieces of CRI information, and the CRI information indicates a CSI-RS resource selected by the terminal from each CSI-RS resource group in the plurality of CSI-RS resource groups.

In an embodiment, when $N_{TRP}$ CSI-RS resource groups is configured by the network device, the CRI information includes one CRI or $N_{TRP}$ CRIs for indicating the CSI-RS resource selected by the terminal in each CSI-RS resource group. The network device determines the TRP or the TRP group performing the CJT selected by the terminal based on the one CRI or $N_{TRP}$ CRIs.

The CRI information is carried with a CRI field. A number of bits of the CRI field is determined based on a total number of CSI-RS resources or based on a number of TRPs or TRP groups configured by the network device.

In response to the CSI-RS resource information including a CSI-RS resource set, the total number of CSI-RS resources is a total number of CSI-RS resources included in the CSI-RS resource set. In response to the CSI-RS resource information including a plurality of CSI-RS resource groups, the total number of CSI-RS resources is a total number of CSI-RS resources included in all the CSI-RS resource groups.

In an implementation, the CRI information includes indication information indicating a CSI-RS resource selected by the terminal, the indication information indicating the CSI-RS resource selected by the terminal includes first indication information and second indication information.

The first indication information indicates a number of TRPs or TRP groups for the CoMP transmission selected by the terminal. The second indication information indicates CSI-RS resources corresponding to TRPs or TRP groups for the CoMP transmission selected by the terminal and is determined based on a number of resource combinations, the number of resource combinations is a number of combinations for a specified number of resources selected from a number of CSI-RS resources configured by the network device, or a number of combinations for a specified number of resources selected from the total number of CSI-RS resources, and the specified number is the number of TRPs or TRP groups for the CoMP transmission selected by the terminal.

In an embodiment, the indication information may be a bitmap with $N_{tot}$ bits, or may have

$$\left\lceil \log_2^{C_{N_{tot}}^N} \right\rceil + \left\lceil \log_2^{N_{tot}} \right\rceil \text{ bits}$$

, where $\left\lceil \log_2^{N_{tot}} \right\rceil$ indicates the number of TRPs or TRP groups selected by the terminal to perform the CJT; $N_{tot}$ indicates the total number of CSI-RS resources in a CSI-RS resource set, or the total number of CSI-RS resources in all the CSI-RS resource groups; the CSI-RS resource index IDs in all the CSI-RS resource sets are consecutive; $\lceil \rceil$ indicates a rounding up operation, and $C_{N_{tot}}^N$ indicates selecting a combination of N CSI-RS resources from $N_{tot}$ for calculation.

In an implementation, the CRI information is carried with a CRI field, and a number of bits of the CRI field is determined based on a number of CSI-RS resources in a CSI-RS resource group selected by the terminal or based on a number of TRPs or TRP groups configured by the network device.

In an implementation, the CRI information includes indication information indicating a CSI-RS resource in the CSI-RS resource group selected by the terminal, the indication information indicating the CSI-RS resource selected by the terminal includes third indication information and fourth indication information. The third indication information indicates a number of CSI-RS resources in the resource group selected by the terminal and is determined based on the number of CSI-RS resources in the resource group selected by the terminal. The fourth indication information indicates resource combinations corresponding to TRPs or TRP groups for the CoMP transmission selected by the terminal and is determined based on a number of resource combinations, the number of resource combinations is a number of combinations for a specified number of resources selected from a number of CSI-RS resources configured by the network device, or a number of combinations for a specified number of resources selected from the total number of CSI-RS resources, and the specified number is the number of TRPs or TRP groups for the CoMP transmission selected by the terminal.

In an embodiment, the indication information may have $N_i$ bits or $\left\lceil \log_2^{C_{N_i}^{N_S}} \right\rceil + \left\lceil \log_2^{N_i} \right\rceil$ bits. The indication information indicates an $i^{th}$ CSI-RS resource group, where $N_i$ indicates a number of CSI-RS resources in the $i^{th}$ CSI-RS resource group, $N_s$ indicates the number of CSI-RS resources selected from the $i^{th}$ CSI-RS resource group, $\left\lceil \log_2^{N_i} \right\rceil$ is used by the terminal to indicate the number of CSI-RS resources selected from the $i^{th}$ CSI-RS resource group.

In an implementation, the indication information indicates port group index information corresponding to TRPs or TRP groups for the CoMP transmission selected by the terminal.

In an implementation, the indication information includes indication information indicating a port group selected by the terminal, the indication information indicating the port group selected by the terminal is determined based on fifth indication information and sixth indication information.

The fifth indication information indicates a number of port groups selected in a CSI-RS resource group selected by the terminal and is determined based on a number of TRPs or TRP groups for the CoMP transmission selected by the terminal. The sixth indication information indicates port combinations corresponding to the TRPs or the TRP groups for the CoMP transmission selected by the terminal, and is determined based on a number of port group combinations, the number of port group combinations is a number of combinations for a specified number of port groups selected from the port groups into which ports included in the single CSI-RS resource are divided, and the specified number is the number of TRPs or TRP groups for the CoMP transmission selected by the terminal.

In an embodiment, the indication information may have $N_{TRP}$ bits or $\left\lceil \log_2^{C_{N_{TRP}}^N} \right\rceil + \left\lceil \log_2^{N_{TRP}} \right\rceil$ bits, indicating a CSI-RS port group selected by the terminal. $\left\lceil \log_2^{N_{TRP}} \right\rceil$ indicates the number of CSI-RS port groups selected by the terminal.

In an implementation, the TRP or the TRP group has a correspondence with a phase factor or an amplitude factor. The indication information indicates a phase factor or an amplitude factor corresponding to the TRP or the TRP group for the CoMP transmission selected by the terminal.

In an implementation, the indication information indicates a quantized value corresponding to the phase factor, or a quantized value corresponding to the amplitude factor.

In the method for CoMP transmission provided in embodiments of the disclosure, the network device configures $N_{TRP}$ TRPs or $N_{TRP}$ TRP groups, obtains the indication information reported by the terminal, and determines N TRPs or N TRP groups selected by the terminal to perform the CJT, which not only realizes that the mTRP or the plurality of TRP groups provide data services to the user via CJT, but also may reduce the indication feedback overhead of the terminal.

It should be noted that the method for CoMP transmission applied to the network device in the embodiments of the disclosure is similar to the execution process of the method for CoMP transmission applied to the terminal, which may refer to the above description of the relevant embodiments, and will not be repeated herein.

The method for CoMP transmission provided in the disclosure is applicable to a process in which the terminal interacts with the network device to realize the CoMP transmission. For the method in which the terminal interacts with the network device to realize the CoMP transmission, the terminal and the network device are respectively equipped with relevant functions for implementing the method for CoMP transmission involved in the above embodiments, and will not be repeated herein.

It should be noted that, those skilled in the art may understand that various embodiments/examples of implementation involved above in the embodiments of the disclosure may be used in combination with the embodiments described above, or may be used independently. The principle of realization is similar whether used independently or in combination with the embodiments described above. In the disclosure, some of the embodiments are illustrated as embodiments used together. Those skilled in the art may understand that such an illustrative description is not a limitation of the embodiments of the disclosure.

Based on the same idea, embodiments of the disclosure further provide an apparatus for CoMP transmission.

It may be understood that the apparatus for CoMP transmission provided in the embodiments of the disclosure includes, in order to realize the above-described functions, a hardware structure and/or a software module corresponding to the implementation of each function. In combination with the units and algorithmic steps of the various examples disclosed in the embodiments of the disclosure, the embodiments of the disclosure are capable of being realized in the form of hardware or a combination of hardware and computer software. The particular application and design constraints of a technical solution depends on whether a particular function is performed in the form of hardware or in the form of computer software driving the hardware. Those skilled in the art may use different ways to implement the described functions for each particular application, but such implementations should not be considered outside the scope of the technical solutions of the embodiments of the disclosure.

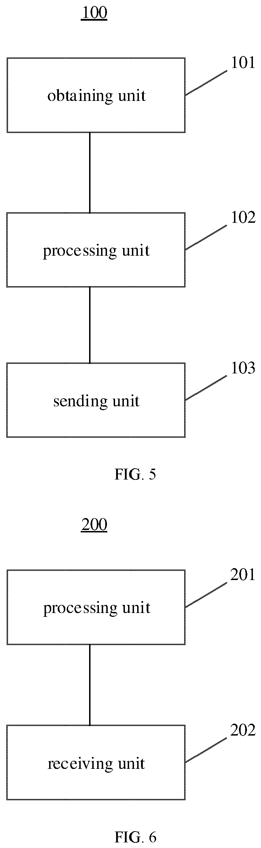

FIG. 5 is a block diagram illustrating an apparatus for CoMP transmission according to an example embodiment. Referring to FIG. 5, the apparatus 100 includes an obtaining unit 101, a processing unit 102, and a sending unit 103.

The obtaining unit 101 is configured to obtain CoMP configuration information configured by a network device, in which the CoMP configuration information configures mTRP or a plurality of TRP groups, each TRP group in the plurality of TRP groups includes at least one TRP, and the mTRP or the plurality of TRP groups performs CJT. The processing unit 102 is configured to select all or part of the TRPs to perform the CJT from the mTRP performing the CJT, or select all or part of the TRP groups to perform the CJT from the plurality of TRP groups performing the CJT, based on the CoMP transmission configuration information. The sending unit 103 is configured to send indication information to the network device, in which the indication information indicates the TRPs performing the CJT selected by the terminal from the mTRP, or the TRP groups selected by the terminal to perform the CJT from the plurality of TRP groups.

In an implementation, the CoMP transmission configuration information includes at least one of: CSI-RS resource information; number information of TRPs or TRP groups; number information of port groups into which ports corresponding to CSI-RS resources are divided; or relationship configuration information, in which the relationship configuration information configures a correspondence between a CSI-RS resource and a TRP or a TRP group, or a correspondence between a port group index and a TRP or a TRP group.

In an implementation, the CSI-RS resource information includes a CSI-RS resource set, the CSI-RS resource set includes a plurality of CSI-RS resources, each CSI-RS resource in the plurality of CSI-RS resources has a correspondence with the TRP or the TRP group, and a number of CSI-RS resources included in the CSI-RS resource set is greater than or equal to a number of TRPs or TRP groups configured by the network device.

In an implementation, the CSI-RS resource information includes a plurality of CSI-RS resource groups, each CSI-RS resource group in the plurality of CSI-RS resource groups includes at least one CSI-RS resource, and resources included in each CSI-RS resource group belong to one or more CSI-RS resource sets. Each CSI-RS resource included in the CSI-RS resource group has a correspondence with the TRP or the TRP group, and a number of CSI-RS resource groups is greater than or equal to a number of TRPs or TRP groups configured by the network device.

In an implementation, the correspondence between each CSI-RS resource in the CSI-RS resource set or in the CSI-RS resource group and the TRP or the TRP group is determined by at least one of following ways: sorting the CSI-RS resources in an ascending order based on CSI-RS resource IDs, and causing first $N_{TRP}$ CSI-RS resources in the CSI-RS resources sorted to correspond to $N_{TRP}$ TRPs or $N_{TRP}$ TRP groups; or determining a correspondence between the $N_{TRP}$ TRPs or the $N_{TRP}$ TRP groups and the CSI-RS resource IDs based on a set mathematical algorithmic criterion; or determining that the $N_{TRP}$ TRPs or the $N_{TRP}$ TRP groups correspond to the $N_{TRP}$ CSI-RS resources based on the relationship configuration information, in which $N_{TRP}$ is the number of TRPs or TRP groups configured by the network device.

In an implementation, the CoMP transmission configuration information includes the CSI-RS resource information, and the CSI-RS resource information includes a single CSI-RS resource.

The CoMP transmission configuration information further includes number information of port groups into which ports included in the single CSI-RS resource are divided, and each port group into which ports included in the single CSI-RS resource are divided has a correspondence with the TRP or the TRP group.

In an implementation, the correspondence between each port group and the TRP or the TRP group is determined in the following manner: sorting the port groups into which ports are divided in an ascending order based on port group indexes, and causing first $N_{TRP}$ port groups in the port groups sorted to correspond to $N_{TRP}$ TRPs or $N_{TRP}$ TRP groups; or determining a correspondence between the $N_{TRP}$ TRPs or the $N_{TRP}$ TRP groups and the port group indexes based on a set mathematical algorithmic criterion; or determining that the $N_{TRP}$ TRPs or the $N_{TRP}$ TRP groups correspond to the $N_{TRP}$ port groups based on the relationship configuration information, in which $N_{TRP}$ is the number of TRPs or TRP groups configured by the network device.

In an implementation, the CoMP transmission configuration information includes the CSI-RS resource information. The indication information includes CRI information.

In an implementation, the CSI-RS resource information includes a CSI-RS resource set, and the CRI information indicates a CSI-RS resource selected by the terminal from the CSI-RS resource set.

In an implementation, the CSI-RS resource information includes a plurality of CSI-RS resource groups, the CRI information includes one or more pieces of CRI information, and the CRI information indicates a CSI-RS resource selected by the terminal from each CSI-RS resource group in the plurality of CSI-RS resource groups.

In an implementation, the CRI information is carried with a CRI field, a number of bits of the CRI field is determined based on a total number of CSI-RS resources or based on a number of TRPs or TRP groups configured by the network device.

In response to the CSI-RS resource information including a CSI-RS resource set, the total number of CSI-RS resources is a total number of CSI-RS resources included in the CSI-RS resource set. In response to the CSI-RS resource information including a plurality of CSI-RS resource groups, the total number of CSI-RS resources is a total number of CSI-RS resources included in all the CSI-RS resource groups.

In an implementation, the CRI information includes indication information indicating a CSI-RS resource selected by the terminal, the indication information indicating the CSI-RS resource selected by the terminal includes first indication information and second indication information.

The first indication information indicates a number of TRPs or TRP groups for the CoMP transmission selected by the terminal. The second indication information indicates CSI-RS resources corresponding to TRPs or TRP groups for the CoMP transmission selected by the terminal and is determined based on a number of resource combinations, the number of resource combinations is a number of combinations for a specified number of resources selected from a number of CSI-RS resources configured by the network device, or a number of combinations for a specified number of resources selected from the total number of CSI-RS resources, and the specified number is the number of TRPs or TRP groups for the CoMP transmission selected by the terminal.

In an implementation, the CRI information is carried with a CRI field, and a number of bits of the CRI field is determined based on a number of CSI-RS resources in a CSI-RS resource group selected by the terminal or based on a number of TRPs or TRP groups configured by the network device.

In an implementation, the CRI information includes indication information indicating a CSI-RS resource in the CSI-RS resource group selected by the terminal, the indication information indicating the CSI-RS resource selected by the terminal includes third indication information and fourth indication information.

The third indication information indicates a number of CSI-RS resources in the resource group selected by the terminal and is determined based on the number of CSI-RS resources in the resource group selected by the terminal. The fourth indication information indicates resource combinations corresponding to TRPs or TRP groups for the CoMP transmission selected by the terminal and is determined based on a number of resource combinations, the number of resource combinations is a number of combinations for a specified number of resources selected from a number of CSI-RS resources configured by the network device, or a number of combinations for a specified number of resources selected from the total number of CSI-RS resources, and the specified number is the number of TRPs or TRP groups for the CoMP transmission selected by the terminal.

In an implementation, indication information indicates port group index information corresponding to TRPs or TRP groups for the CoMP transmission selected by the terminal.

In an implementation, the indication information includes indication information indicating a port group selected by the terminal, the indication information indicating the port group selected by the terminal is determined based on fifth indication information and sixth indication information.

The fifth indication information indicates a number of port groups selected in a CSI-RS resource group selected by the terminal and is determined based on a number of TRPs or TRP groups for the CoMP transmission selected by the terminal. The sixth indication information indicates port combinations corresponding to the TRPs or the TRP groups for the CoMP transmission selected by the terminal, and is determined based on a number of port group combinations, the number of port group combinations is a number of combinations for a specified number of port groups selected from the port groups into which ports included in the single CSI-RS resource are divided, and the specified number is the number of TRPs or TRP groups for the CoMP transmission selected by the terminal.

In an implementation, the TRP or the TRP group has a correspondence with a phase factor or an amplitude factor. The indication information indicates a phase factor or an amplitude factor corresponding to a TRP or a TRP group for the CoMP transmission selected by the terminal.

In an implementation, the indication information indicates a quantized value corresponding to the phase factor, or a quantized value corresponding to the amplitude factor.

FIG. 6 is a block diagram illustrating an apparatus for CoMP transmission according to an example embodiment. Referring to FIG. 6, the apparatus 200 includes a processing unit 201 and a receiving unit 202.

The processing unit 201 is configure CoMP transmission configuration information, in which the CoMP transmission configuration information configures mTRP or a plurality of TRP groups, each TRP group in the plurality of TRP groups includes at least one TRP, and the mTRP or the plurality of TRP groups performs CJT.

The receiving unit 202 is configured to receive indication information from a terminal, in which the indication information indicates a TRP or a TRP group performing the CJT selected by the terminal from the mTRP, the TRPs performing the CJT is all or part of the TRPs selected by the terminal to perform the CJT from the mTRP performing the CJT based on the CoMP transmission configuration information, and the TRP groups performing the CJT is all or part of the TRP groups selected by the terminal to perform the CJT from the plurality of TRP groups performing the CJT based on the CoMP transmission configuration information.

In an implementation, the CoMP transmission configuration information includes at least one of: CSI-RS resource information; number information of TRPs or TRP groups; number information of port groups into which ports corresponding to CSI-RS resources are divided; or relationship configuration information, in which the relationship configuration information configures a correspondence between a CSI-RS resource and a TRP or a TRP group, or a correspondence between a port group index and a TRP or a TRP group.

In an implementation, the CSI-RS resource information includes a CSI-RS resource set, the CSI-RS resource set includes a plurality of CSI-RS resources, each CSI-RS resource in the plurality of CSI-RS resources has a correspondence with the TRP or the TRP group, and a number of CSI-RS resources included in the CSI-RS resource set is greater than or equal to a number of TRPs or TRP groups configured by the network device.

In an implementation, the CSI-RS resource information includes a plurality of CSI-RS resource groups, each CSI-RS resource group in the plurality of CSI-RS resource groups includes at least one CSI-RS resource, and resources included in each CSI-RS resource group belong to one or more CSI-RS resource sets. Each CSI-RS resource included in the CSI-RS resource group has a correspondence with the TRP or the TRP group, and a number of CSI-RS resource groups is greater than or equal to a number of TRPs or TRP groups configured by the network device.

In an implementation, the correspondence between each CSI-RS resource in the CSI-RS resource set or in the CSI-RS resource group and the TRP or the TRP group is determined by at least one of following ways: sorting the CSI-RS resources in an ascending order based on CSI-RS resource IDs, and causing first $N_{TRP}$ CSI-RS resources in the CSI-RS resources sorted to correspond to $N_{TRP}$ TRPs or $N_{TRP}$ TRP groups; or determining a correspondence between the $N_{TRP}$ TRPs or the $N_{TRP}$ TRP groups and the CSI-RS resource IDs based on a set mathematical algorithmic criterion; or determining that the $N_{TRP}$ TRPs or the $N_{TRP}$ TRP groups correspond to the $N_{TRP}$ CSI-RS resources based on the relationship configuration information, in which $N_{TRP}$ is the number of TRPs or TRP groups configured by the network device.

In an implementation, the CoMP transmission configuration information includes the CSI-RS resource information, and the CSI-RS resource information includes a single CSI-RS resource. The CoMP transmission configuration information further includes number information of port groups into which ports included in the single CSI-RS resource are divided, and each port group into which ports included in the single CSI-RS resource are divided has a correspondence with the TRP or the TRP group.

In an implementation, the correspondence between each port group and the TRP or the TRP group is determined in the following manner: sorting the port groups into which ports are divided in an ascending order based on port group indexes, and causing first $N_{TRP}$ port groups in the port groups sorted to correspond to $N_{TRP}$ TRPs or $N_{TRP}$ TRP groups; or determining a correspondence between the $N_{TRP}$ TRPs or the $N_{TRP}$ TRP groups and the port group indexes based on a set mathematical algorithmic criterion; or determining that the $N_{TRP}$ TRPs or the $N_{TRP}$ TRP groups correspond to the $N_{TRP}$ port groups based on the relationship configuration information, in which $N_{TRP}$ is the number of TRPs or TRP groups configured by the network device.

In an implementation, the CoMP transmission configuration information includes the CSI-RS resource information. The indication information includes CRI information.

In an implementation, the CSI-RS resource information includes a CSI-RS resource set, and the CRI information indicates a CSI-RS resource selected by the terminal from the CSI-RS resource set.

In an implementation, the CSI-RS resource information includes a plurality of CSI-RS resource groups, the CRI information includes one or more pieces of CRI information, and the CRI information indicates a CSI-RS resource selected by the terminal from each CSI-RS resource group in the plurality of CSI-RS resource groups.

In an implementation, the CRI information is carried with a CRI field, a number of bits of the CRI field is determined based on a total number of CSI-RS resources or based on a number of TRPs or TRP groups configured by the network device.

In response to the CSI-RS resource information including a CSI-RS resource set, the total number of CSI-RS resources is a total number of CSI-RS resources included in the CSI-RS resource set. In response to the CSI-RS resource information including a plurality of CSI-RS resource groups, the total number of CSI-RS resources is a total number of CSI-RS resources included in all the CSI-RS resource groups.

In an implementation, the CRI information includes indication information indicating a CSI-RS resource selected by the terminal, and the indication information indicating the CSI-RS resource selected by the terminal includes first indication information and second indication information.

The first indication information indicates a number of TRPs or TRP groups for the CoMP transmission selected by the terminal. The second indication information indicates CSI-RS resources corresponding to TRPs or TRP groups for the CoMP transmission selected by the terminal and is determined based on a number of resource combinations, the number of resource combinations is a number of combinations for a specified number of resources selected from a number of CSI-RS resources configured by the network device, or a number of combinations for a specified number of resources selected from the total number of CSI-RS resources, and the specified number is the number of TRPs or TRP groups for the CoMP transmission selected by the terminal.

In an implementation, the CRI information is carried with a CRI field, and a number of bits of the CRI field is determined based on a number of CSI-RS resources in a CSI-RS resource group selected by the terminal or based on a number of TRPs or TRP groups configured by the network device.

In an implementation, the CRI information includes indication information indicating a CSI-RS resource in the CSI-RS resource group selected by the terminal, the indication information indicating the CSI-RS resource selected by the terminal includes third indication information and fourth indication information. The third indication information indicates a number of CSI-RS resources in the resource group selected by the terminal and is determined based on the number of CSI-RS resources in the resource group selected by the terminal. The fourth indication information indicates resource combinations corresponding to TRPs or TRP groups for the CoMP transmission selected by the terminal and is determined based on a number of resource combinations, the number of resource combinations is a number of combinations for a specified number of resources selected from a number of CSI-RS resources configured by the network device, or a number of combinations for a specified number of resources selected from the total number of CSI-RS resources, and the specified number is the number of TRPs or TRP groups for the CoMP transmission selected by the terminal.

In an implementation, indication information indicates port group index information corresponding to TRPs or TRP groups for the CoMP transmission selected by the terminal.

In an implementation, the indication information includes indication information indicating a port group selected by the terminal, the indication information indicating the port group selected by the terminal is determined based on fifth indication information and sixth indication information.

The fifth indication information indicates a number of port groups selected in a CSI-RS resource group selected by the terminal and is determined based on a number of TRPs or TRP groups for the CoMP transmission selected by the terminal. The sixth indication information indicates port combinations corresponding to the TRPs or the TRP groups for the CoMP transmission selected by the terminal, and is determined based on a number of port group combinations, the number of port group combinations is a number of combinations for a specified number of port groups selected from the port groups into which ports included in the single CSI-RS resource are divided, and the specified number is the number of TRPs or TRP groups for the CoMP transmission selected by the terminal.

In an implementation, the TRP or the TRP group has a correspondence with a phase factor or an amplitude factor. The indication information indicates a phase factor or an amplitude factor corresponding to a TRP or a TRP group for the CoMP transmission selected by the terminal.

In an implementation, the indication information indicates a quantized value corresponding to the phase factor, or a quantized value corresponding to the amplitude factor.

The specific ways in which the individual modules of the apparatuses in the above embodiments perform the operations have been described in detail in the embodiments relating to the method, and will not be illustrated in detail herein.

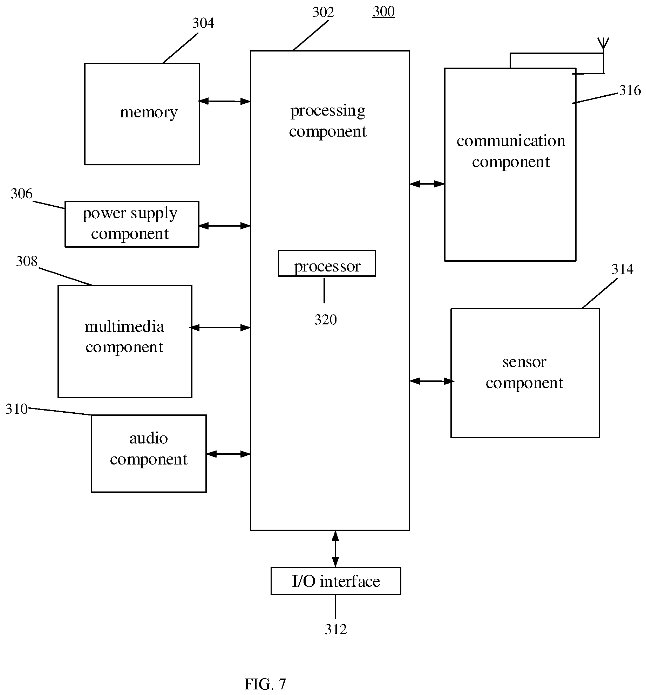

FIG. 7 is a block diagram illustrating a device 300 for CoMP transmission according to an example embodiment. The device 300 may be provided as a terminal. For example, the device 300 may be a cell phone, a computer, a digital broadcast terminal, a message transceiver device, a game console, a tablet device, a medical device, a fitness device, a personal digital assistant, and the like.

Referring to FIG. 7, the device 300 may include one or more of the following components: a processing component 302, a memory 304, a power supply component 306, a multimedia component 308, an audio component 310, an input/output (I/O) interface 312, a sensor component 314, and a communication component 316.

The processing component 302 generally controls overall operations of the device 300, such as operations associated with display, telephone calls, data communications, camera operations, and recording operations. The processing component 302 may include one or more processors 320 to execute instructions to complete all or part of the steps of the above method. In addition, the processing component 302 may include one or more modules to facilitate interactions between the processing component 302 and other components. For example, the processing component 302 may include a multimedia module to facilitate interactions between the multimedia component 308 and the processing component 302.

The memory 304 is configured to store various types of data to support operations at the device 300. Examples of such data include instructions for any application or method operating on the device 300, contact data, phonebook data, messages, pictures, videos, etc. The memory 304 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic storage, a flash memory, a magnetic disk or an optical disk.

The power supply component 306 provides powers to various components of the device 300. The power supply component 306 may include a power management system, one or more power supplies, and other components associated with generating, managing, and distributing powers for the device 300.

The multimedia component 308 includes a screen that provides an output interface between the device 300 and the user. In some embodiments, the screen may include a liquid crystal display (LCD) and a touch panel (TP). If the screen includes a touch panel, the screen may be implemented as a touch screen to receive an input signal from a user. The touch panel includes one or more touch sensors to sense touches, slides, and gestures on the touch panel. The touch sensor may not only sense a boundary of a touch or sliding action, but also detect a duration and pressure associated with the touch or sliding operation. In some embodiments, the multimedia component 308 includes a front-facing camera and/or a rear-facing camera. When the device 300 is in an operation mode, such as a shooting mode or a video mode, the front camera and/or the rear camera may receive external multimedia data. Each of the front-facing camera and the rear-facing camera may be a fixed optical lens system or may have variable focal length and optical zoom capabilities.

The audio component 310 is configured to output and/or input audio signals. For example, the audio component 310 includes a microphone (MIC), which is configured to receive external audio signals when the device 300 is in an operating mode, such as a call mode, a recording mode, and a voice recognition mode. The received audio signal may be further stored in the memory 304 or transmitted via the communication component 316. In some embodiments, the audio component 310 also includes a speaker for outputting audio signals.

The I/O interface 312 provides an interface between the processing component 302 and a peripheral interface module, which may be a keyboard, a click wheel, a button, etc. The button may include, but is not limited to: a home button, volume buttons, a start button, and a lock button.

The sensor component 314 includes one or more sensors for providing status assessment of various aspects for the device 300. For example, the sensor component 314 may detect an open/closed state of the device 300, a relative positioning of components, such as a display and a keypad of device 300. The sensor component 314 may also detect position changes of the device 300 or a component of the device 300, a presence or absence of user contacts with the device 300, an orientation or an acceleration/deceleration of the device 300 and temperature changes of the device 300. The sensor component 314 may include a proximity sensor configured to detect a presence of a nearby object without any physical contact. The sensor component 314 may also include a light sensor, such as a CMOS or CCD image sensor, for use in imaging applications. In some embodiments, the sensor component 314 may also include an acceleration sensor, a gyroscope sensor, a magnetic sensor, a pressure sensor, or a temperature sensor.

The communication component 316 is configured to facilitate wired or wireless communication between the device 300 and other devices. The device 300 may access a wireless network based on a communication standard, such as Wi-Fi, 4G or 5G, or their combination. In an exemplary embodiment, the communication component 316 receives a broadcast signal or broadcast-related information from an external broadcast management system via a broadcast channel. In an exemplary embodiment, the communication component 316 also includes a near field communication (NFC) module to facilitate short-range communications. For example, the NFC module may be implemented based on radio frequency identification (RFID) technology, infrared data association (IrDA) technology, ultra wideband (UWB) technology, Bluetooth (BT) technology, and other technologies.

In an exemplary embodiment, the device 300 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above-mentioned methods.

In an example embodiment, a non-transitory computer-readable storage medium including instructions is also provided, such as the memory 304 including instructions. The above instructions may be executed by the processor 320 of the device 300 to perform the above method. For example, the non-transitory computer-readable storage medium may be a ROM, a random access memory (RAM), a CD-ROM, a magnetic tape, a floppy disk, an optical data storage device, and the like.

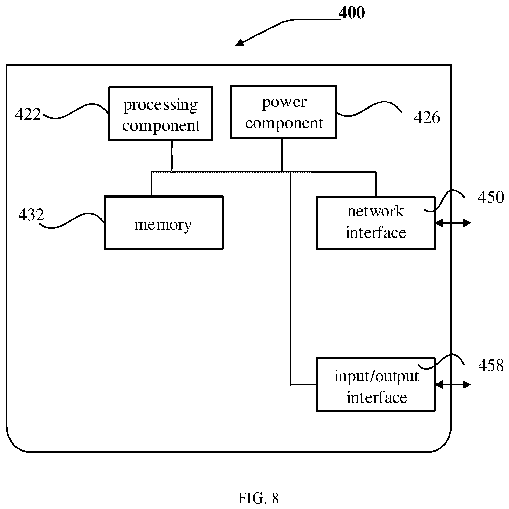

FIG. 8 is a block diagram illustrating a device 400 for CoMP transmission according to an example embodiment. For example, the device 400 may be provided as a network side device. Referring to FIG. 8, the device 400 includes a processing component 422, which further includes one or more processors, and a memory resource represented by a memory 432 for storing instructions that may be executed by the processing component 422, such as an application program. The application program stored in memory 432 may include one or more modules each corresponding to a set of instructions. Alternatively, the processing component 422 is configured to execute the instructions to perform the foregoing methods.

The device 400 may also include a power component 426 configured to perform power management of the device 400, a wired or wireless network interface 450 configured to connect the device 400 to a network, and an input/output (I/O) interface 458. The device 400 may operate an operating system based on the operating system stored in the memory 432, such as Windows Server TM, Mac OS XTM, UnixTM, LinuxTM, FreeBSDTM, or the like.

In exemplary embodiments, there is also provided a non-transitory computer-readable storage medium including instructions, such as a memory 432 including instructions, the instructions being executable by a processing component 422 of the device 400 for performing the above-described methods. For example, the non-transitory computer-readable storage medium may be ROM, random access memory (RAM), CD-ROM, magnetic tape, floppy disks, and optical data storage devices, etc.

In the disclosure, the term "a plurality of" refers to two or more than two, and other quantifiers are used similarly. The term "and/or" may describe association relationships of associated objects, indicating that there may be three types of relationships, for example, A and/or B, which may mean: A exists alone, A and B exist at the same time, and B exists alone. The singular forms "a/an", "said" and "the" are also intended to include the plural forms unless the context clearly dictates otherwise.

It may be further understood that the terms "first", "second", etc., are used to describe various types of information, but such information should not be limited to these terms. These terms are only configured to distinguish the same type of information from one another and do not indicate a particular order or level of importance. Indeed, the expressions "first", "second", etc. may be used completely interchangeably. For example, without departing from the scope of the embodiments of the disclosure, first information may also be called second information, and similarly, second information may also be called first information.

It may be further understood that although operations are described in a specific order in the drawings according to the embodiments of the disclosure, it should not be understood as requiring that these operations be performed in the specific order illustrated or in a serial order, or that perform all operations illustrated to obtain the desired result. In certain circumstances, multitasking and parallel processing may be advantageous.

Other implementations of the embodiments of the disclosure will be readily apparent to those skilled in the art from consideration of the specification and practice of the disclosure disclosed herein. This application is intended to cover any modification, use or adaptation of the embodiments of the disclosure, these modifications, uses or adaptations follow the general principles of the embodiments of the disclosure and include those in the technical field not disclosed by the embodiments of the disclosure Common knowledge or common technical means. The specification and examples are to be considered exemplary only, with a true scope and spirit of the embodiments of the disclosure being indicated by the following claims.

It should be understood that the embodiments of the disclosure are not limited to the precise structures described above and shown in the drawings, and various modifications and changes may be made without departing from the scope thereof. The scope of embodiments of the disclosure is limited only by the appended claims.

**Claims**

1.  A method for coordinated multiple point (CoMP) transmission, applied to a terminal, comprising:

     obtaining CoMP configuration information configured by a network device, wherein the CoMP configuration information configures multiple transmission reception points (mTRP) or a plurality of TRP groups, each TRP group in the plurality of TRP groups comprises at least one TRP, and the mTRP or the plurality of TRP groups perform coherent joint transmission (CJT);
     selecting all or part of the TRPs to perform the CJT from the mTRP performing the CJT, or selecting all or part of the TRP groups to perform the CJT from the plurality of TRP groups performing the CJT, based on the CoMP transmission configuration information; and
     sending indication information to the network device, wherein the indication information indicates the TRPs selected by the terminal to perform the CJT from the mTRP, or the TRP groups selected by the terminal to perform the CJT from the plurality of TRP groups.

2.  The method according to claim 1, wherein the CoMP transmission configuration information comprises at least one of:

     channel status information-reference signal (CSI-RS) resource information;
     number information of TRPs or TRP groups;
     number information of port groups into which ports corresponding to CSI-RS resources are divided; or
     relationship configuration information, wherein the relationship configuration information configures a correspondence between a CSI-RS resource and a TRP or a TRP group, or a correspondence between a port group index and a TRP or a TRP group.

3.  The method according to claim 2, wherein the CSI-RS resource information comprises a CSI-RS resource set, the CSI-RS resource set comprises a plurality of CSI-RS resources, each CSI-RS resource in the plurality of CSI-RS resources has a correspondence with the TRP or the TRP group, and a number of CSI-RS resources comprised in the CSI-RS resource set is greater than or equal to a number of TRPs or TRP groups configured by the network device.

4.  The method according to claim 2, wherein the CSI-RS resource information comprises a plurality of CSI-RS resource groups, each CSI-RS resource group in the plurality of CSI-RS resource groups comprises at least one CSI-RS resource, and resources comprised in each CSI-RS resource group belong to one or more CSI-RS resource sets; each CSI-RS resource comprised in the CSI-RS resource group has a correspondence with the TRP or the TRP group, and a number of CSI-RS resource groups is greater than or equal to a number of TRPs or TRP groups configured by the network device.

5.  The method according to claim 3 or 4, wherein the correspondence between each CSI-RS resource in the CSI-RS resource set or in the CSI-RS resource group and the TRP or the TRP group is determined by at least one of following ways:

sorting the CSI-RS resources in the CSI-RS resource set or in the CSI-RS resource group in an ascending order based on CSI-RS resource identifiers (IDs), and causing first $N_{TRP}$ CSI-RS resources in the CSI-RS resources sorted to correspond to $N_{TRP}$ TRPs or $N_{TRP}$ TRP groups; or determining a correspondence between the $N_{TRP}$ TRPs or the $N_{TRP}$ TRP groups and the CSI-RS resource IDs based on a set mathematical algorithmic criterion; or determining that the $N_{TRP}$ TRPs or the $N_{TRP}$ TRP groups correspond to the $N_{TRP}$ CSI-RS resources based on the relationship configuration information,
wherein $N_{TRP}$ is the number of TRPs or TRP groups configured by the network device.

6. The method according to claim 2, wherein the CoMP transmission configuration information comprises the CSI-RS resource information, and the CSI-RS resource information comprises a single CSI-RS resource;
the CoMP transmission configuration information further comprises number information of port groups into which ports comprised in the single CSI-RS resource are divided, and each port group into which ports comprised in the single CSI-RS resource are divided has a correspondence with the TRP or the TRP group.

7. The method according to claim 6, wherein the correspondence between each port group and the TRP or the TRP group is determined in the following manner:

sorting the port groups into which ports are divided in an ascending order based on port group indexes, and causing first $N_{TRP}$ port groups in the port groups sorted to correspond to $N_{TRP}$ TRPs or $N_{TRP}$ TRP groups; or determining a correspondence between the $N_{TRP}$ TRPs or the $N_{TRP}$ TRP groups and the port group indexes based on a set mathematical algorithmic criterion; or
determining that the $N_{TRP}$ TRPs or the $N_{TRP}$ TRP groups correspond to the $N_{TRP}$ port groups based on the relationship configuration information,
wherein $N_{TRP}$ is the number of TRPs or TRP groups configured by the network device.

8. The method according to any one of claims 2 to 5, wherein the CoMP transmission configuration information comprises the CSI-RS resource information; and
indication information comprises CSI-RS resource indication (CRI) information.

9. The method according to claim 8, wherein the CSI-RS resource information comprises a CSI-RS resource set, and the CRI information indicates a CSI-RS resource selected by the terminal from the CSI-RS resource set.

10. The method according to claim 8, wherein the CSI-RS resource information comprises a plurality of CSI-RS resource groups, the CRI information comprises one or more pieces of CRI information, and the CRI information indicates a CSI-RS resource selected by the terminal from each CSI-RS resource group in the plurality of CSI-RS resource groups.

11. The method according to any one of claims 8 to 10, wherein the CRI information is carried with a CRI field, a number of bits of the CRI field is determined based on a total number of CSI-RS resources or based on a number of TRPs or TRP groups configured by the network device;

in response to the CSI-RS resource information comprising a CSI-RS resource set, the total number of CSI-RS resources is a total number of CSI-RS resources comprised in the CSI-RS resource set; and
in response to the CSI-RS resource information comprising a plurality of CSI-RS resource groups, the total number of CSI-RS resources is a total number of CSI-RS resources comprised in all the CSI-RS resource groups.

12. The method according to claim 11, wherein the CRI information comprises indication information indicating a CSI-RS resource selected by the terminal, the indication information indicating the CSI-RS resource selected by the terminal comprises first indication information and second indication information;

the first indication information indicates a number of TRPs or TRP groups for the CoMP transmission selected by the terminal; and
the second indication information indicates CSI-RS resources corresponding to TRPs or TRP groups for the CoMP transmission selected by the terminal and is determined based on a number of resource combinations, the number of resource combinations is a number of combinations for a specified number of resources selected from a number of CSI-RS resources configured by the network device, or a number of combinations for a specified number of resources selected from the total number of CSI-RS resources, and the specified number is the number of TRPs or TRP groups for the CoMP transmission selected by the terminal.

13. The method according to any one of claims 8 to 10, wherein the CRI information is carried with a CRI field, and a number of bits of the CRI field is determined based on a number of CSI-RS resources in a CSI-RS resource group selected by the terminal or based on a number of TRPs or TRP groups configured by the network device.

14. The method according to claim 13, wherein the CRI information comprises indication information indicating a CSI-RS resource in the CSI-RS resource group selected by the terminal, the indication information indicating the CSI-RS resource selected by the terminal comprises third indication information and fourth indication information;

the third indication information indicates a number of CSI-RS resources in the CSI-RS resource group selected by the terminal and is determined based on the number of CSI-RS resources in the resource group selected by the terminal; and

the fourth indication information indicates resource combinations corresponding to TRPs or TRP groups for the CoMP transmission selected by the terminal and is determined based on a number of resource combinations, the number of resource combinations is a number of combinations for a specified number of resources selected from a number of CSI-RS resources configured by the network device, or a number of combinations for a specified number of resources selected from the total number of CSI-RS resources, and the specified number is the number of TRPs or TRP groups for the CoMP transmission selected by the terminal.

15. The method according to claim 6, wherein the indication information indicates port group index information corresponding to TRPs or TRP groups for the CoMP transmission selected by the terminal.

16. The method according to claim 15, wherein the indication information comprises indication information indicating a port group selected by the terminal, the indication information indicating the port group selected by the terminal is determined based on fifth indication information and sixth indication information;

the fifth indication information indicates a number of port groups selected in a CSI-RS resource group selected by the terminal and is determined based on a number of TRPs or TRP groups for the CoMP transmission selected by the terminal; and

the sixth indication information indicates port combinations corresponding to the TRPs or the TRP groups for the CoMP transmission selected by the terminal, and is determined based on a number of port group combinations, the number of port group combinations is a number of combinations for a specified number of port groups selected from the port groups into which ports comprised in the single CSI-RS resource are divided, and the specified number is the number of TRPs or TRP groups for the CoMP transmission selected by the terminal.

17. The method according to claim 2, wherein the TRP or the TRP group has a correspondence with a phase factor or an amplitude factor; and

indication information indicates a phase factor or an amplitude factor corresponding to a TRP or a TRP group for the CoMP transmission selected by the terminal.

18. The method according to claim 17, wherein the indication information indicates a quantized value corresponding to the phase factor, or a quantized value corresponding to the amplitude factor.

19. A method for coordinated multiple point (CoMP) transmission, applied to a network device, comprising:

configuring CoMP transmission configuration information, wherein the CoMP transmission configuration information configures multiple transmission reception points (mTRP) or a plurality of TRP groups, each TRP group in the plurality of TRP groups comprises at least one TRP, and the mTRP or the plurality of TRP groups perform coherent joint transmission (CJT); and

receiving indication information from a terminal, wherein the indication information indicates the TRPs or the TRP groups selected by the terminal to perform the CJT from the mTRP, the TRPs performing the CJT is all or part of the TRPs selected by the terminal to perform the CJT from the mTRP performing the CJT based on the CoMP transmission configuration information, and the TRP groups performing the CJT is all or part of the TRP groups selected by the terminal to perform the CJT from the plurality of TRP groups performing the CJT based on the CoMP transmission configuration information.

20. The method according to claim 19, wherein the CoMP transmission configuration information comprises at least one of:

channel status information-reference signal (CSI-RS) resource information;
number information of TRPs or TRP groups;
number information of port groups into which ports corresponding to CSI-RS resources are divided; or
relationship configuration information, wherein the relationship configuration information configures a correspondence between a CSI-RS resource and a TRP or a TRP group, or a correspondence between a port group index and a TRP or a TRP group.

21. The method according to claim 20, wherein the CSI-RS resource information comprises a CSI-RS resource set, the CSI-RS resource set comprises a plurality of CSI-RS resources, each CSI-RS resource in the plurality of CSI-RS resources has a correspondence with the TRP or the TRP group, and a number of CSI-RS resources comprised in the CSI-RS resource set is greater than or equal to a number of TRPs or TRP groups configured by the network device.

22. The method according to claim 20, wherein the CSI-RS resource information comprises a plurality of CSI-RS resource groups, each CSI-RS resource group in the plurality of CSI-RS resource groups comprises at least one CSI-RS resource, and resources comprised in each CSI-RS resource group belong to one or more CSI-RS resource sets; each CSI-RS resource comprised in the CSI-RS resource group has a correspondence with the TRP or the TRP group, and a number of CSI-RS resource groups is greater than or equal to a number of TRPs or TRP groups configured by the network device.

23. The method according to claim 21 or 22, wherein the correspondence between each CSI-RS resource in the CSI-RS resource set or in the CSI-RS resource group and the TRP or the TRP group is determined by at least one of the following ways:

sorting the CSI-RS resources in the CSI-RS resource set or in the CSI-RS resource group in an ascending order based on CSI-RS resource IDs, and causing first $N_{TRP}$ CSI-RS resources in the CSI-RS resources sorted to correspond to $N_{TRP}$ TRPs or $N_{TRP}$ TRP groups; or determining a correspondence between the $N_{TRP}$ TRPs or the $N_{TRP}$ TRP groups and the CSI-RS resource IDs based on a set mathematical algorithmic criterion; or
determining that the $N_{TRP}$ TRPs or the $N_{TRP}$ TRP groups correspond to the $N_{TRP}$ CSI-RS resources based on the relationship configuration information,
wherein $N_{TRP}$ is the number of TRPs or TRP groups configured by the network device.

24. The method according to claim 20, wherein the CoMP transmission configuration information comprises the CSI-RS resource information, and the CSI-RS resource information includes a single CSI-RS resource;
the CoMP transmission configuration information further comprises number information of port groups into which ports comprised in the single CSI-RS resource are divided, and each port group into which ports comprised in the single CSI-RS resource are divided has a correspondence with the TRP or the TRP group.

25. The method according to claim 24, wherein the correspondence between each port group and the TRP or the TRP group is determined in the following manner:

sorting the port groups into which ports are divided in an ascending order based on port group indexes, and causing first $N_{TRP}$ port groups in the port groups sorted to correspond to $N_{TRP}$ TRPs or $N_{TRP}$ TRP groups; or determining a correspondence between the $N_{TRP}$ TRPs or the $N_{TRP}$ TRP groups and the port group indexes based on a set mathematical algorithmic criterion; or
determining that the $N_{TRP}$ TRPs or the $N_{TRP}$ TRP groups corresponding to the $N_{TRP}$ port groups based on the relationship configuration information,
wherein $N_{TRP}$ is the number of TRPs or TRP groups configured by the network device.

26. The method according to any one of claims 20 to 23, wherein the CoMP transmission configuration information comprises the CSI-RS resource information; and
indication information comprises CSI-RS resource indication (CRI) information.

27. The method according to claim 26, wherein the CSI-RS resource information comprises a CSI-RS resource set, and the CRI information indicates a CSI-RS resource selected by the terminal from the CSI-RS resource set.

**28.** The method according to claim 26, wherein the CSI-RS resource information comprises a plurality of CSI-RS resource groups, the CRI information comprises one or more pieces of CRI information, and the CRI information indicates a CSI-RS resource selected by the terminal from each CSI-RS resource group in the plurality of CSI-RS resource groups.

**29.** The method according to any one of claims 26 to 28, wherein the CRI information is carried with a CRI field, a number of bits of the CRI field is determined based on a total number of CSI-RS resources or based on a number of TRPs or TRP groups configured by the network device;

in response to the CSI-RS resource information comprising a CSI-RS resource set, the total number of CSI-RS resources is a total number of CSI-RS resources comprised in the CSI-RS resource set; and
in response to the CSI-RS resource information comprising a plurality of CSI-RS resource groups, the total number of CSI-RS resources is a total number of CSI-RS resources comprised in all the CSI-RS resource groups.

**30.** The method according to claim 29, wherein the CRI information comprises indication information indicating a CSI-RS resource selected by the terminal, the indication information indicating the CSI-RS resource selected by the terminal comprises first indication information and second indication information;

the first indication information indicates a number of TRPs or TRP groups configured for the CoMP transmission selected by the terminal; and
the second indication information indicates CSI-RS resources corresponding to TRPs or TRP groups for the CoMP transmission selected by the terminal and is determined based on a number of resource combinations, the number of resource combinations is a number of combinations for a specified number of resources selected from a number of CSI-RS resources configured by the network device, or a number of combinations for a specified number of resources selected from the total number of CSI-RS resources, and the specified number is the number of TRPs or TRP groups for the CoMP transmission selected by the terminal.

**31.** The method according to any one of claims 26 to 28, wherein the CRI information is carried with a CRI field, and a number of bits of the CRI field is determined based on a number of CSI-RS resources in a CSI-RS resource group selected by the terminal or based on a number of TRPs or TRP groups configured by the network device.

**32.** The method according to claim 31, wherein the CRI information comprises indication information indicating a CSI-RS resource in the CSI-RS resource group selected by the terminal, the indication information indicating the CSI-RS resource selected by the terminal comprises third indication information and fourth indication information;

the third indication information indicates a number of CSI-RS resources in the CSI-RS resource group selected by the terminal and is determined based on the number of CSI-RS resources in the resource group selected by the terminal; and
the fourth indication information indicates resource combinations corresponding to TRPs or TRP groups for the CoMP transmission selected by the terminal and is determined based on a number of resource combinations, the number of resource combinations is a number of combinations for a specified number of resources selected from a number of CSI-RS resources configured by the network device, or a number of combinations for a specified number of resources selected from the total number of CSI-RS resources, and the specified number is the number of TRPs or TRP groups for the CoMP transmission selected by the terminal.

**33.** The method according to claim 24, wherein indication information indicates port group index information corresponding to TRPs or TRP groups for the CoMP transmission selected by the terminal.

**34.** The method according to claim 33, wherein the indication information comprises indication information indicating a port group selected by the terminal, the indication information indicating the port group selected by the terminal is determined based on fifth indication information and sixth indication information;

the fifth indication information indicates a number of port groups selected in a CSI-RS resource group selected by the terminal and is determined based on a number of TRPs or TRP groups for the CoMP transmission selected by the terminal; and
the sixth indication information indicates port combinations corresponding to the TRPs or the TRP groups for the CoMP transmission selected by the terminal, and is determined based on a number of port group combinations, the number of port group combinations is a number of combinations for a specified number of port groups selected from the port groups into which ports comprised in the single CSI-RS resource are divided, and the specified number is the number of TRPs or TRP groups for the CoMP transmission selected by the terminal.

35. The method according to claim 20, wherein the TRP or the TRP group has a correspondence with a phase factor or an amplitude factor; and
indication information indicates a phase factor or an amplitude factor corresponding to a TRP or a TRP group for the CoMP transmission selected by the terminal.

36. The method according to claim 35, wherein the indication information indicates a quantized value corresponding to the phase factor, or a quantized value corresponding to the amplitude factor.

37. An apparatus for coordinated multiple point (CoMP) transmission, applied to a network device, comprising:

an obtaining unit, configured to obtain CoMP configuration information configured by a network device, wherein the CoMP configuration information configures multiple transmission reception points (mTRP) or a plurality of TRP groups, each TRP group in the plurality of TRP groups comprises at least one TRP, and the mTRP or the plurality of TRP groups performs coherent joint transmission (CJT);
a processing unit, configured to select all or part of the TRPs to perform the CJT from the mTRP performing the CJT, or select all or part of the TRP groups to perform the CJT from the plurality of TRP groups performing the CJT, based on the CoMP transmission configuration information; and
a sending unit, configured to send indication information to the network device, wherein the indication information indicates the TRPs performing the CJT selected by the terminal from the mTRP, or the TRP groups selected by the terminal to perform the CJT from the plurality of TRP groups.

38. An apparatus for coordinated multiple point (CoMP) transmission, applied to a network device, comprising:

a processing unit, configured to configure CoMP transmission configuration information, wherein the CoMP transmission configuration information configures multiple transmission reception points (mTRP) or a plurality of TRP groups, each TRP group in the plurality of TRP groups comprises at least one TRP, and the mTRP or the plurality of TRP groups performs coherent joint transmission (CJT); and
a receiving unit, configured to receive indication information from a terminal, wherein the indication information indicates the TRPs or the TRP groups selected by the terminal to perform the CJT from the mTRP, the TRPs performing the CJT is all or part of the TRPs selected by the terminal to perform the CJT from the mTRP performing the CJT based on the CoMP transmission configuration information, and the TRP groups performing the CJT is all or part of the TRP groups selected by the terminal to perform the CJT from the plurality of TRP groups performing the CJT based on the CoMP transmission configuration information.

39. A device for coordinated multiple point (CoMP) transmission, comprising:

a processor; and
a memory configured to store processor executable instructions;
wherein the processor is configured to: perform the method of any one of claims 1 to 18, or perform the method of any one of claims 19 to 36.

40. A storage medium, storing instructions which, when the instructions in the storage medium are applied to a processor of a terminal, enable the terminal to perform the method of any one of claims 1 to 18, and when the instructions in the storage medium are applied to a processor of a network device, enable the network device to perform the method of any one of claims 19 to 36.

TRP1

TRP2

FIG. 1

FIG. 2

obtaining CoMP configuration information configured by a network device, wherein the CoMP configuration information configures mTRP, and the mTRP perform CJT

S11a

selecting all or part of the TRPs to perform the CJT from the mTRP performing the CJT based on the CoMP transmission configuration information

S12a

sending indication information to the network device, wherein the indication information indicates the TRPs selected by the terminal to perform the CJT from the mTRP

S13a

FIG. 3A

obtaining CoMP configuration information configured by a network device, wherein the CoMP configuration information configures a plurality of TRP groups, the plurality of TRP groups perform CJT, and each TRP group in the plurality of TRP groups includes at least one TRP

S11b

selecting all or part of the TRP groups to perform the CJT from the plurality of TRP groups performing the CJT based on the CoMP transmission configuration information

S12b

sending indication information to the network device, wherein the indication information indicates the TRP groups selected by the terminal to perform the CJT from the plurality of TRP groups

S13b

FIG. 3B

configuring CoMP transmission configuration information, wherein the CoMP transmission configuration information configures mTRP or a plurality of TRP groups, each TRP group in the plurality of TRP groups includes at least one TRP, and the mTRP or the plurality of TRP groups perform CJT

S21

receiving indication information from a terminal, wherein the indication information indicates the TRPs or the TRP groups performing the CJT selected by the terminal from the mTRP

S22

FIG. 4

100

obtaining unit — 101

processing unit — 102

sending unit — 103

FIG. 5

200

processing unit — 201

receiving unit — 202

FIG. 6

FIG. 7

**400**

processing component

422

power component

426

432

memory

network interface

450

input/output interface

458

FIG. 8

## INTERNATIONAL SEARCH REPORT

| International application No. |
| --- |
| **PCT/CN2022/112120** |

### A. CLASSIFICATION OF SUBJECT MATTER

H04B7/024(2017.01)i

According to International Patent Classification (IPC) or to both national classification and IPC

### B. FIELDS SEARCHED

Minimum documentation searched (classification system followed by classification symbols)

IPC:H04B7/-

Documentation searched other than minimum documentation to the extent that such documents are included in the fields searched

Electronic data base consulted during the international search (name of data base and, where practicable, search terms used)

3GPP, CNTXT, ENTXTC, VEN, WPABSC, CNKI: 选中, 选择, 接收点, 传输接收点, 部分, 全部, 多个, 相干联合传输, 联合, 相干, 非相干, 协作, 配置, 信道状态信息, 参考信号, 上报, 指示, 基站, 网络设备, 用户设备, 终端, CJT, coherent, joint, NCJT, non-coherent, CSI, RS, multi, all, TRP, rec+, point, UE, user, equipment, BS, cho?se?, select+

### C. DOCUMENTS CONSIDERED TO BE RELEVANT

| Category* | Citation of document, with indication, where appropriate, of the relevant passages | Relevant to claim No. |
| --- | --- | --- |
| X | CN 113810090 A (HUAWEI TECHNOLOGIES CO., LTD.) 17 December 2021 (2021-12-17) description, paragraphs [0123]-[0271], and figure 5 | 1-40 |
| A | CN 114826351 A (QUALCOMM INC.) 29 July 2022 (2022-07-29) entire document | 1-40 |
| A | WO 2022147657 A1 (BEIJING XIAOMI MOBILE SOFTWARE CO., LTD.) 14 July 2022 (2022-07-14) entire document | 1-40 |
| A | WO 2021159504 A1 (QUALCOMM INC.) 19 August 2021 (2021-08-19) entire document | 1-40 |
| A | HUAWEI et al. "R1-2203151 "CSI Enhancement for Coherent JT and Mobility"" *3GPP tsg_ran\wg1_rl1*, No. tsgr1_109-e, 30 April 2022 (2022-04-30), entire document | 1-40 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 April 2023** | **19 April 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/112120**

| Patent document cited in search report | | | Publication date (day/month/year) | Patent family member(s) | | | Publication date (day/month/year) |
|---|---|---|---|---|---|---|---|
| CN | 113810090 | A | 17 December 2021 | WO | 2021254305 | A1 | 23 December 2021 |
| CN | 114826351 | A | 29 July 2022 | WO | 2018027908 | A1 | 15 February 2018 |
| WO | 2022147657 | A1 | 14 July 2022 | CN | 115039447 | A | 09 September 2022 |
| WO | 2021159504 | A1 | 19 August 2021 | CN | 115088334 | A | 20 September 2022 |
| | | | | IN | 202227041164 | A | 23 September 2022 |
| | | | | EP | 4104581 | A1 | 21 December 2022 |
| | | | | US | 2023093589 | A1 | 23 March 2023 |

Form PCT/ISA/210 (patent family annex) (July 2022)